(19) **Europäisches Patentamt / European Patent Office / Office européen des brevets**

(11) **EP 3 933 290 B1**

(12) **EUROPEAN PATENT SPECIFICATION**

(45) Date of publication and mention of the grant of the patent:
**24.07.2024 Bulletin 2024/30**

(21) Application number: **19917383.2**

(22) Date of filing: **26.02.2019**

(51) International Patent Classification (IPC):
**F24F 11/88** (2018.01)     **F24F 1/32** (2011.01)
**H04B 3/02** (2006.01)     **H02M 3/00** (2006.01)
**H02M 3/335** (2006.01)     **H02M 1/12** (2006.01)
**H02M 1/32** (2007.01)     **H02M 1/44** (2007.01)
**H02M 7/217** (2006.01)     **H02M 7/537** (2006.01)
**H02M 1/00** (2006.01)

(52) Cooperative Patent Classification (CPC):
**F24F 1/32; F24F 11/88; H02M 1/007; H02M 1/126; H02M 1/327; H02M 1/44; H02M 3/003; H02M 3/33507; H02M 7/217; H02M 7/537; H04B 3/02**

(86) International application number:
**PCT/JP2019/007215**

(87) International publication number:
**WO 2020/174563 (03.09.2020 Gazette 2020/36)**

(54) **ELECTRICAL DEVICE**

ELEKTRISCHE VORRICHTUNG

DISPOSITIF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.01.2022 Bulletin 2022/01**

(73) Proprietor: **MITSUBISHI ELECTRIC CORPORATION**
**Chiyoda-ku**
**Tokyo 100-8310 (JP)**

(72) Inventors:
• **YAMAKAJI, Yusuke**
  **Tokyo 100-8310 (JP)**
• **SUGA, Ikuro**
  **Tokyo 100-8310 (JP)**
• **ARISAWA, Koichi**
  **Tokyo 100-8310 (JP)**
• **ICHIKI, Satoru**
  **Tokyo 100-8310 (JP)**

(74) Representative: **Meissner Bolte Partnerschaft mbB**
**Patentanwälte Rechtsanwälte**
**Postfach 86 06 24**
**81633 München (DE)**

(56) References cited:
**JP-A- 2012 083 090     JP-A- 2012 083 090**
**JP-A- 2012 159 252     JP-A- 2012 159 252**
**JP-A- 2015 143 598     JP-A- 2015 143 598**
**JP-A- 2016 220 398     JP-A- 2016 220 398**

**Description**

Technical Field

The invention relates to electrical devices and air conditioners.

Background Art

An air conditioner equipped with an inverter device that converts DC power into AC power generally uses a noise filter to prevent switching noise from leaking into a power supply so that surrounding devices connected to the power supply will not malfunction due to the switching noise of the inverter device in an outdoor unit leaking into the power supply. Patent Document 1 describes an example of an air conditioner in which a capacitor (communication line capacitor) is connected between a communication line connecting an indoor unit and the outdoor unit, and a metal bottom plate of the outdoor unit's housing in order to effectively reduce the switching noise leaking into the power supply. JP 2016-220398 A relates to an electric device connected to both a commercial AC power supply and a DC power supply such as a storage battery, and is suitably used for an electric device using a heat pump such as an air conditioner, a refrigerator, and a water heater.

Citation List

Patent Document

Patent Document 1:   Japanese Patent Application Laid-Open JP 2015-143598 A (FIG. 5)

Summary of the Invention

Problems to be Solved by the Invention

However, in the air conditioner of Patent Document 1, the switching noise of the inverter device is mixed in the communication line. As a result, a problem arises in that the quality of a communication signal flowing through the communication line is deteriorated, making it easy for the air conditioner to malfunction.

In addition, in an electrical device that has separate boards in a single housing and communicates and/or transmits power between the separate boards, the switching noise of the inverter device mounted on one of the boards is mixed in the communication line. As a result, a problem arises in that the quality of the communication signal flowing through the communication line is deteriorated, causing the electrical device to malfunction more easily.

The invention disclosed in the present specification aims to reduce the switching noise that is mixed in the power supply without affecting the quality of the communication signal communicated between the separated boards.

Means for Solving Problems

According to the invention, the problem is solved by the subject matter outlined in independent claim 1. Advantageous further developments of the invention are set forth in the dependent claims 2 to 7.

Effect of the Invention

One example of an electrical device disclosed in the present specification includes a capacitor that is connected between a conductor to which DC power output to the first communication module from the first isolated conversion circuit is supplied and the metal part of the housing, the conductor being a conductor on a negative potential side serving as a voltage reference or a conductor on a positive potential side which is at a higher potential than the negative potential side, so that the switching noise that is mixed in the power supply can be reduced without affecting the quality of the communication signal communicated between the separated boards.

Brief Description of the Drawings

FIG. 1 is a diagram showing a first example of an electrical device according to Embodiment 1.

FIG. 2 is a diagram showing a second example of the electrical device according to Embodiment 1.

FIG. 3 is a diagram showing a configuration of a first communication module and a second communication module according to Embodiment 1.

FIG. 4 is a diagram showing a first example of a transmission circuit of the first communication module according to Embodiment 1.

FIG. 5 is a diagram showing a second example of the transmission circuit of the first communication module according to Embodiment 1.

FIG. 6 is a diagram showing an isolated conversion circuit according to Embodiment 1.

FIG. 7 is a diagram illustrating a noise path in an electrical device of Comparative Example 1.

FIG. 8 is a diagram illustrating a noise path in an electrical device of Comparative Example 2.

FIG. 9 is a diagram illustrating a noise path in the electrical device according to Embodiment 1.

FIG. 10 is a diagram showing a third example of the electrical device according to Embodiment 1.

FIG. 11 is a diagram showing a fourth example of the electrical device according to Embodiment 1.

FIG. 12 is a diagram showing a first example of an electrical device according to Embodiment 2.

FIG. 13 is a diagram showing a second example of the electrical device according to Embodiment 2.

FIG. 14 is a diagram showing a first example of an air conditioner according to Embodiment 3.

FIG. 15 is a diagram showing an example of connection of a capacitor between the first communication module and the metal part in FIG. 14.

FIG. 16 is a diagram showing a semiconductor element and a heat sink mounted on each of the converter circuit and the first inverter circuit in FIG. 14.

FIG. 17 is a diagram showing an example of the communication line of FIG. 14.

FIG. 18 is a diagram showing a second example of the air conditioner according to Embodiment 3.

FIG. 19 is a diagram showing a third example of the air conditioner according to Embodiment 3.

FIG. 20 is a diagram showing a fourth example of the air conditioner according to Embodiment 3.

FIG. 21 is a diagram showing an example of an electrical device according to Embodiment 4.

FIG. 22 is a diagram showing an example of frequency characteristics of relative permeability of an inductor component of FIG. 21.

FIG. 23 is a diagram showing an example of the electrical device of FIG. 21 for a case where frequencies of noise is low.

FIG. 24 is a diagram showing an example of the electrical device of FIG. 21 for a case where frequencies of noise is high.

FIG. 25 is a diagram showing an example of an air conditioner according to Embodiment 5.

FIG. 26 is a diagram showing leakage current characteristics of a capacitor that is connected between the communication line and the metal part.

FIG. 27 is a diagram showing an example of signal waveforms in the communication line of FIG. 25.

FIG. 28 is a diagram showing an example of frequency characteristics of noise in a power supply line of FIG. 25.

FIG. 29 is a diagram showing an example of an electrical device according to Embodiment 6.

FIG. 30 is a diagram showing an example of an air conditioner according to Embodiment 7.

## Modes for carrying out the Invention

### Embodiment 1

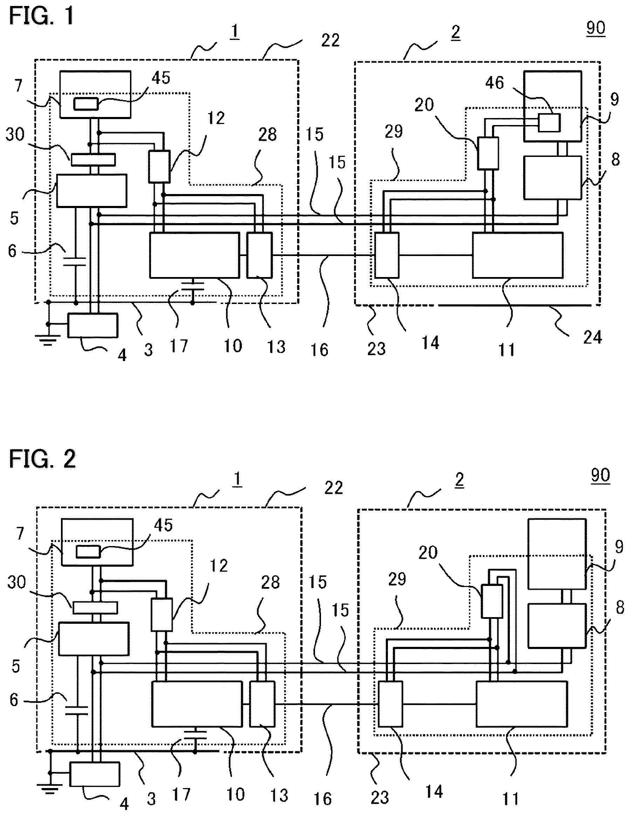

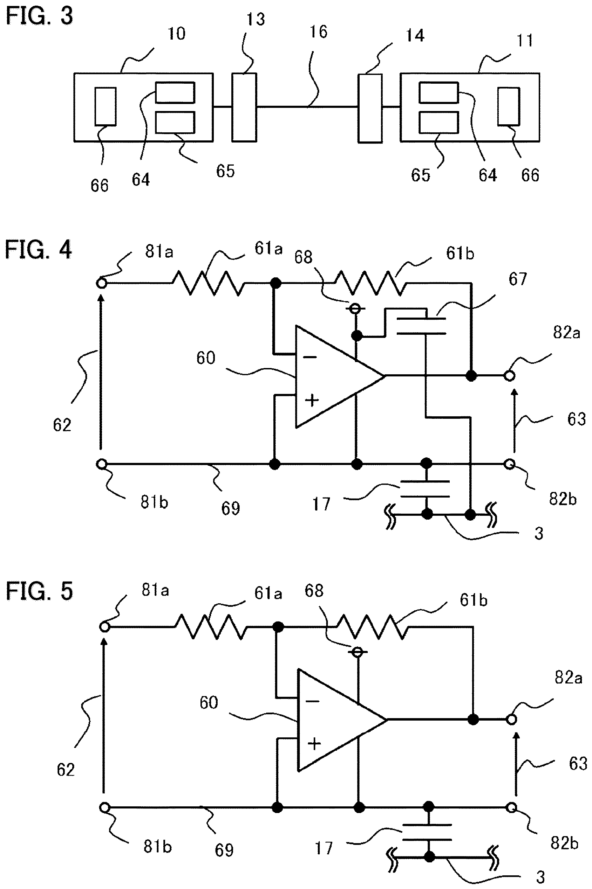

FIG. 1 is a diagram showing a first example of an electrical device according to Embodiment 1, and FIG. 2 is a diagram showing a second example of the electrical device according to Embodiment 1. FIG. 3 is a diagram showing a configuration of a first communication module and a second communication module according to Embodiment 1. FIG. 4 is a diagram showing a first example of a transmission circuit of the first communication module according to Embodiment 1, and FIG. 5 is a diagram showing a second example of the transmission circuit of the first communication module according to Embodiment 1.

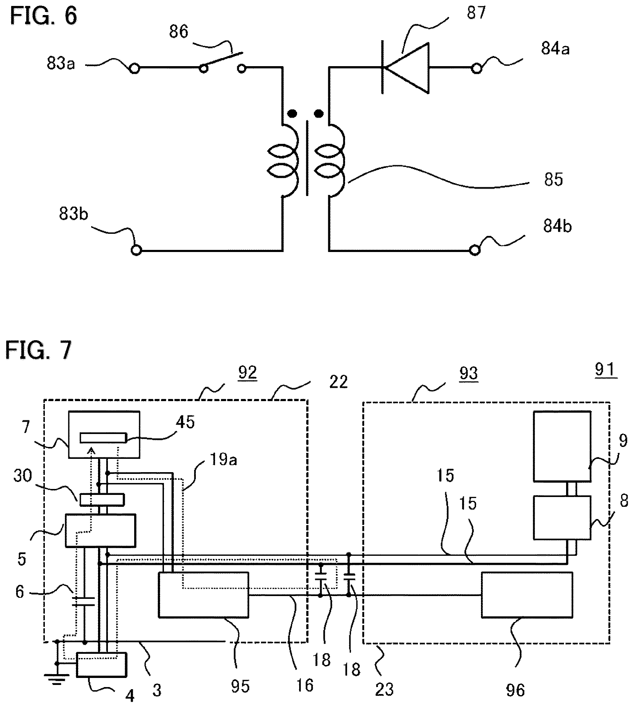

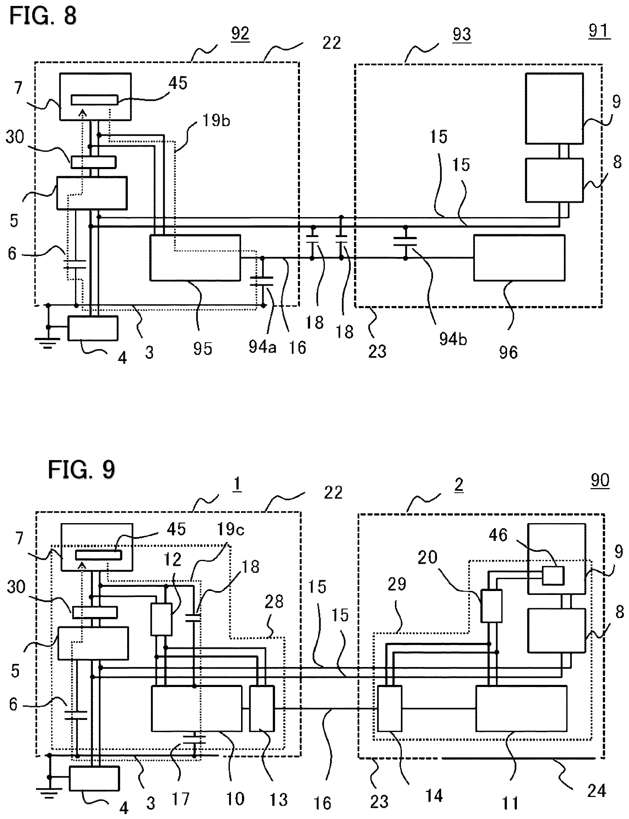

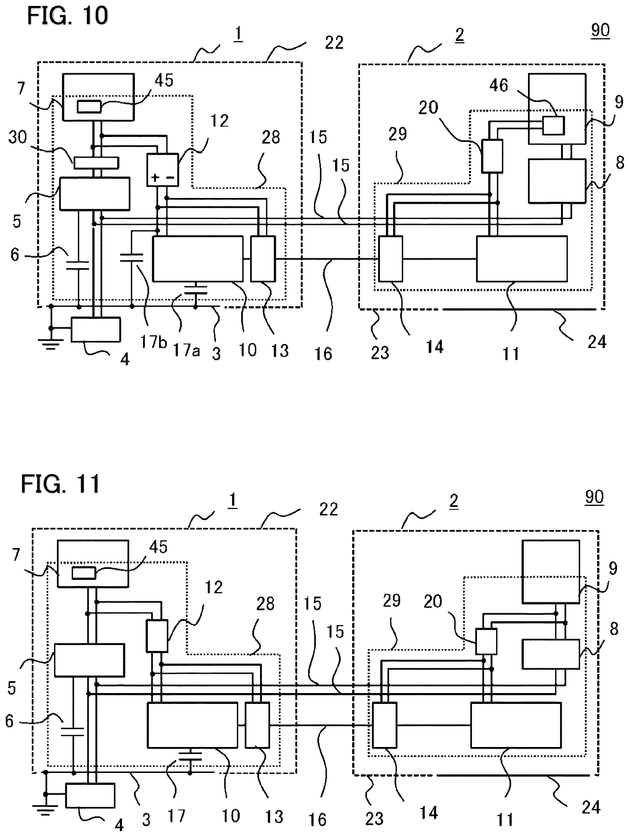

FIG. 6 is a diagram showing an isolated conversion circuit according to Embodiment 1. FIG. 7 is a diagram illustrating a noise path in the electrical device of Comparative Example 1, and FIG. 8 is a diagram illustrating a noise path in the electrical device of Comparative Example 2. FIG. 9 is a diagram illustrating a noise path in the electrical device according to Embodiment 1. FIG. 10 is a diagram showing a third example of the electrical device according to Embodiment 1, and FIG. 11 is a diagram showing a fourth example of the electrical device according to Embodiment 1. The electrical device 90 of Embodiment 1 includes two or more units that communicate with each other. Here, the description is made assuming that there are two units as the case of two or more units to avoid complications. The same sign is attached to the same or corresponding components, and repetition of the description may be omitted.

The electrical device 90 of Embodiment 1 includes a first unit 1 and a second unit 2. The first unit 1 operates by being supplied with power by a power supply 4, which is an AC or DC power supply. The second unit 2 operates by the power from the power supply 4 via the first unit 1. In FIGS. 1 and 2, an example is shown in which the power supply 4 is an AC power supply. When the power supply 4 is an AC power supply, a single-phase or a three-phase AC power supply can be used. If the power supply 4 is in the case of single-phase, either a single-phase 2-wire or single-phase 3-wire power supply can be used. If the power supply 4 is in the case of 3-phase, either a 3-phase 3-wire or 3-phase 4-wire power supply can be used. Any of the power supplies may be used in the present embodiment.

The first unit 1 includes a first unit housing 22, a first noise filter 5, a converter circuit 30, first load equipment 7, an isolated conversion circuit 12, a first communication module 10, a first signal isolation circuit 13, a first unit board 28, a capacitor 6 connected between a metal part 3 of the first unit housing 22 and the first noise filter 5, and a capacitor 17 connected between the metal part 3 of the first unit housing 22 and the first communication module 10. The second unit 2 includes a second unit housing 23, a second noise filter 8, a second load equipment 9, an isolated conversion circuit 20, a second communication module 11, a second signal isolation circuit 14, and a second unit board 29.

The first unit 1 and the second unit 2 communicate with each other via a communication line 16. The second unit 2 is operated by AC power supplied from the first unit 1 via a power supply line 15. The communication line 16 includes one or more wires. When the communication line 16 includes one wire, the return path for a communication signal is the power supply line 15, etc.

The first noise filter 5 removes noise from the power supply 4, the first load equipment 7, and the isolated conversion circuit 12. The converter circuit 30 converts the AC power supplied through the first noise filter 5 into DC power. The DC power generated by the converter circuit 30 is supplied to the first load equipment 7 and the isolated conversion circuit 12. The isolated conversion circuit 12 is an isolation type power conversion circuit, and an isolation type DC-DC converter or an isolation transformer is used therefor. The isolated conversion circuit 12 supplies DC power to the first communication module 10 and the first signal isolation circuit 13 that is a photo-coupler.

The first communication module 10 and the first signal isolation circuit 13 are operated only by the DC power generated by the isolated conversion circuit 12. The first communication module 10 communicates with the second unit 2 via the first signal isolation circuit 13. The first signal isolation circuit 13 allows the communication signal to pass while insulating the first communication module 10 from the communication line 16. The capacitor 6 is a ground capacitor connected between the first noise filter 5 and the metal part 3 of the first unit housing 22 and may be referred to as a Y capacitor.

Note that the first signal isolation circuit 13 may be the isolation transformer. When the first signal isolation circuit 13 is the isolation transformer, the first signal isolation circuit 13 does not need to be supplied with the DC power from the isolated conversion circuit 12, and therefore a power supply line between the isolated conversion circuit 12 and the first signal isolation circuit 13 is not necessary. Unless otherwise noted, the first signal isolation circuit 13 will be described using an example of the photo-coupler.

The first load equipment 7 has a circuit with switching elements such as a converter circuit and an inverter circuit, namely a power conversion circuit 45, and a circuit and a power machine such as a motor that serve as a load to consume the power generated by the power conversion circuit 45. The inverter circuit converts DC power to AC power in order to supply the AC power to an AC load such as an AC motor. The converter circuit of the first load equipment 7 is used when there is a DC load that operates at a different voltage from that of the converter circuit 30. The first load equipment 7 does not necessarily have to be inside the first unit housing 22 of the first unit 1, but it will be described in the present embodiment as being inside the first unit housing 22 of the first unit 1.

Since the first load equipment 7 includes the power conversion circuit 45, it generates switching noise. The first unit board 28 is equipped with the first noise filter 5, the converter circuit 30, the power conversion circuit 45 of the first load equipment 7, the isolated conversion circuit 12, the first communication module 10, the first signal isolation circuit 13, the capacitor 6, and the capacitor 17. The first unit housing 22 of the first unit 1 has the metal part 3 at least partially. The first load equipment 7 is a noise source because a load included in the first load equipment 7 includes devices generating noise such as the power conversion circuit 45, a discharge device, and the motor. Note that, if the converter circuit 30 is a circuit with the switching elements, it generates switching noise.

The second noise filter 8 removes noise from the AC power of the power supply 4 supplied via the power supply line 15, the second load equipment 9, and the isolated conversion circuit 20. The second load equipment 9 has a circuit and a power machine such as a motor that serve as a load for consuming the power. The second unit 2 in the first example of the electrical device 90 shown in FIG. 1 includes a converter circuit 46 that converts AC power into DC power. The converter circuit 46 converts the AC power supplied by the second noise filter 8 into the DC power. The DC power generated by the converter circuit 46 is supplied to the isolated conversion circuit 20.

The isolated conversion circuit 20 is the isolation type power conversion circuit, and the isolation type DC-DC converter or the isolation transformer is used therefor. The isolated conversion circuit 20 supplies the DC power to the second communication module 11 and the second signal isolation circuit 14 that is the photo-coupler. The second communication module 11 and the second signal isolation circuit 14 operate only with the DC power generated by the isolated conversion circuit 20. The second communication module 11 communicates with the first unit 1 via the second signal isolation circuit 14. The second signal isolation circuit 14 allows the communication signal to pass while insulating the second communication module 11 from the communication line 16.

Note that the second signal isolation circuit 14 may be the isolation transformer. If the second signal isolation circuit 14 is the isolation transformer, the second signal isolation circuit 14 does not need to be supplied with the DC power from the isolated conversion circuit 20, and therefore a power supply line between the isolated conversion circuit 20 and the second signal isolation circuit 14 is unnecessary. Unless otherwise noted, the second signal isolation circuit 14 will be described using an example of the photo-coupler.

In the second unit 2 in the second example of the electrical device 90 shown in FIG. 2, an example is shown in which the isolated conversion circuit 20 is an isolation type AC-DC converter that converts AC power to DC power. Note that, in the second unit 2 in the first example of the electrical device 90 shown in FIG. 1, an example is shown in which the second unit housing 23 has a metal part 24. Further, in the second unit 2 in the second example of the electrical device 90 shown in FIG. 2, an example is shown in which the second unit housing 23 does not have the metal part 24.

On the second unit board 29, the second noise filter 8, load devices of the second load equipment 9, the isolated converter circuit 20, the second communication module 11, and the second signal isolation circuit 14 are mounted. In the second unit 2 in the first example of the electrical device 90 shown in FIG. 1, the converter circuit 46 that is a load device of the second load equipment 9 is mounted on the second unit board 29.

The first communication module 10 and the second communication module 11 includes a receiver circuit 64, a transmission circuit 65, and a signal processing circuit 66 such as a microcomputer. For example, in the first communication module 10, load status in the first unit 1 is processed by the signal processing circuit 66, and the communication signal such as the load status are transmitted from the transmission circuit 65 to the second communication module 11.

The second communication module 11 receives the communication signal from the first unit 1 by the receiver circuit 64 and converts them into data, etc. of the load status in the first unit 1 by the signal processing circuit 66. In the second communication module 11, load status in the second unit 2 is processed by the signal processing circuit 66, and the communication signal such as the load status is transmitted from the transmission circuit 65 to the first communication module 10. The first communication module 10 receives the communication signal from the second unit 2 by the receiver circuit 64 and converts them into data etc. of the load status in the second unit 2 by the signal processing circuit 66.

The converter circuit 30, the converter circuit mounted on the first load equipment 7, the power conversion circuit 45 such as the inverter circuit, the discharge device mounted on the first load equipment 7, the motor, and the like are the noise sources. The converter circuit 30 and the power conversion circuit 45 have switching elements, and since the switching elements are intendedly switched (ON/OFF), switching noise is generated. The frequency of the switching noise generated varies depending on a carrier frequency and the characteristics of the switching elements in use but has frequency components of about 10 kHz to 1 GHz.

The first load equipment 7 including the converter circuit 30 and the power conversion circuit 45 that are noise sources, and at least one of the first communication module 10, the isolated conversion circuit 12, and the first signal isolation circuit 13 are disposed on the same first unit board 28. In FIGS. 1 and 2, an example is shown in which the converter circuit 30, a part of the first load equipment 7 including the power conversion circuit 45, the first communication module 10, the isolated conversion circuit 12, the first signal isolation circuit 13, the capacitor 6, and the capacitor 17 are mounted on the first unit board 28.

Typically, the first unit board 28 is a printed circuit board, and in many cases, wiring patterns connecting the first load equipment 7 that is the noise source are disposed in close proximity (arranged closely) within 10 cm from the first communication module 10 or the isolated conversion circuit 12 on the first unit board 28. Even in this case, the configuration of the present embodiment, namely connection configuration of the capacitor 17 (capacitor connection configuration) described in detail later, can reduce the noise mixed in the communication line 16.

Typically, the communication line 16 and the power supply line 15 that connect the first unit 1 and the second unit 2 are partially running parallel to each other. Usually, the communication line 16 and the power supply line 15 are collectively wired outside the first unit 1 and the second unit 2, and the communication line 16 and the power supply line 15 are often wired to run parallel to each other inside the first unit 1 and the second unit 2. Furthermore, the first signal isolation circuit 13 and the first noise filter 5 are often disposed in close proximity (arranged closely) on the first unit board 28, and in this case, a wiring pattern leading to the communication line 16 and a wiring pattern leading to the power supply line 15 may be wired to run parallel to each other. The same is true for the second signal isolation circuit 14 and the second noise filter 8 in the second unit 2. Typically, the second unit board 29 is also a printed circuit board.

The first communication module 10 and the first signal isolation circuit 13 are supplied with the DC power generated by the isolated conversion circuit 12. The isolation type DC-DC converter or the isolation transformer is used for the isolated conversion circuit 12. Various systems are known for isolation type DC-DC converters, such as a flyback system, a forward system, etc., but any system is acceptable in the present embodiment. An example of the isolation type DC-DC converter is shown in FIG. 6. For the isolated conversion circuit 12 and the isolated conversion circuit 20 that is shown in FIG. 2, the isolated DC-DC converter shown in FIG. 6 can be used, for example. The isolated conversion circuit 12 shown in FIG. 6 includes a transformer 85, a switch 86, and a diode 87. Further, the isolated conversion circuit 20 shown in FIG. 6 also includes the transformer 85, the switch 86, and the diode 87.

The DC power output from the converter circuit 30 or the converter circuit 46 is input to input pins 83a and 83b. By repeatedly turning on and off the switch 86, DC power isolated from the inputted DC power can be output from output pins 84a and 84b. Note that the isolated conversion circuit 12 of the first unit 1 can be an isolation type AC-DC converter that converts AC power to DC power and outputs it, like the isolated conversion circuit 20 shown in FIG. 2. However, it is common to use the isolation type DC-DC converter that has a simple circuit system. The isolation type AC-DC converter is, for example, a circuit in which a rectifier circuit such as a bridge circuit is disposed on the input pin 83a and 83b sides in the circuit of FIG. 6.

The first communication module 10 and the first signal isolation circuit 13 are operated only by the DC power generated by the isolated conversion circuit 12. The isolated conversion circuit 12 may output one type of DC power, but if necessary, multiple isolated conversion circuits 12 may be used for multiple DC power outputs with different voltages. In the case for the multiple DC power outputs, in order to equalize impedance with respect to high frequency components between the multiple insulated conversion circuits 12, it is desirable that a capacitor is inserted between the multiple insulated conversion circuits 12 (capacitor addition example 1) or between each insulated conversion circuit 12 and the metal part 3 of the first unit housing 22 of the first unit 1 (capacitor addition example 2).

Although it is stated here that the impedance should be equal, in reality, the impedance at both ends of the capacitor is not zero because the impedance is determined by an equivalent circuit determined from the capacitor's own capacitance, residual inductance, and residual resistance. However, in the present embodiment, the impedance in the isolated circuit is compared with the impedance of the capacitor, and as a practical comparison, the impedance at both ends of the capacitor can be regarded as sufficiently small.

In the second unit 2, the second communication module 11 and the second signal isolation circuit 14 are operated by being supplied with DC power generated by the isolated conversion circuit 20 that is the isolation type DC-DC converter or the isolation type AC-DC converter or the isolation transformer. In this case, multiple DC power outputs may be used using multiple isolated conversion circuits 20, if necessary. In the case of the multiple DC power outputs, in order to equalize the impedance with respect to high frequency components between the multiple isolated conversion circuits 20, it is desirable that a capacitor is inserted between the multiple isolated conversion circuits 20 (capacitor addition example 1), or a capacitor is inserted between each isolated conversion circuit 20 and the metal part 24 of the second unit housing 23 of the second unit 2 (capacitor addition example 2). When the capacitor addition example 2 is used in the second unit 2, the second unit housing 23 having the metal part 24 is used as shown in FIG. 1.

In general, as in the outdoor unit of the air conditioner of Patent Document 1, the outdoor communication module corresponding to the first communication module 10 and the bottom plate of the outdoor housing corresponding to the metal part 3 of the first unit housing 22 are not connected by a wire, and no DC current flows between them. In other words, the outdoor communication module corresponding to the first communication module 10 and the bottom plate of the outdoor housing corresponding to the metal part 3 of the first unit housing 22 are DC isolated. Consider the case where no capacitor 17 is connected between the first communication module 10 of the first unit 1 and the metal part 3 of the first unit housing 22.

If reference potential of the first communication module 10 is reference potential 1 and potential of the metal part 3 of the first unit housing 22 is reference potential 2, DC isolation is made between the conductor where the reference potential 1 is being generated and the conductor where the reference potential 2 is being generated. A potential difference is generated between the reference potential 1 and the reference potential 2 during the operation of the first unit 1. Even if the circuits are not connected by the wire and are DC isolated described above, they can be operated with reference to the reference potential 1 if they can be operated in a closed system.

However, for switching noise (AC power) that contains high-frequency components (AC components), the insulation without the wire between the reference potential 1 and the reference potential 2 does not necessarily mean insulation, because AC current flows due to parasitic capacitance between the conductor where the reference potential 1 is being generated and the conductor where the reference potential 2 is being generated. In other words, insulation simply by the absence of the wire between the conductor where the reference potential 1 is being generated and the conductor where the reference potential 2 is being generated is not necessarily AC isolated. When appropriate, the conductor where the reference potential 1 is being generated or to be generated and the conductor where the reference potential 2 is being generated or to be generated are denoted as the conductor of reference potential 1 and the conductor of reference potential 2.

The electrical device 90 of Embodiment 1 differs from the air conditioner of Patent Document 1 in that the capacitor 17 is disposed between the conductor of reference potential 1 and the conductor of reference potential 2. The reference potential of the first communication module 10 is usually the potential of the negative output side (refer to FIG. 10) of the isolated conversion circuit 12 that supplies the DC power to the first communication module 10. The voltage output by the isolated conversion circuit 12 is a voltage between the potential on the negative output side and the potential on the positive output side. The potential on the negative output side is a voltage reference with respect to the potential on the positive output side, and the negative potential side conductor is a voltage reference with respect to the positive potential side conductor.

The potential of the negative output side is the reference with respect to the potential of the positive output side, so the negative output side is denoted as ground, when appropriate. The conductor of the negative output side potential (negative potential side conductor) and the conductor of the positive output side potential (positive potential side conductor) to which the DC power is supplied by the isolated conversion circuit 12 are DC isolated from the conductor of the reference potential 2, namely the metal part 3 of the first unit housing 22. Within the first communication module 10, the conductor on the negative potential side is a conductor where the reference potential 1 is generated, namely the ground line, and the conductor on the positive potential side is a driving power supply line for driving a circuit.

The same is true for the first signal isolation circuit 13 to which the DC power is supplied by the isolated conversion circuit 12. A DC power supply line on the negative output side and a DC power supply line on the positive output side for the output from the isolated conversion circuit 12 to the first communication module 10 and the first signal isolation circuit 13 are also conductors on the negative potential side and the positive potential side, respectively. When appropriate, the conductor on the negative potential side and the conductor on the positive potential side to which the DC power is supplied are abbreviated as the negative potential side of DC power and the positive potential side of DC power, respectively. The potential of the conductor on the negative potential side is the reference with respect to the potential of the conductor on the positive potential side, so the negative potential side is denoted as ground, when appropriate.

As shown in FIGS. 1 and 2, the example in which the capacitor 17 is disposed between the negative potential side (ground) of the DC power supplied to the first communication module 10 and the metal part 3 of the first unit housing 22 is not a limitation, and the capacitor 17 may also be disposed between the positive potential side of the DC power supplied to the first communication module 10 and the metal part 3 of the first unit housing 22, as described below.

Thus, the electrical device 90 of Embodiment 1 is characterized in that the capacitor 17 is disposed between the positive potential side or ground (negative potential side) of the DC power supplied to the first communication module 10 and the metal part 3 of the first unit housing 22. In other words, the electrical device 90 of the Embodiment 1 includes the capacitor 17 that is connected between a conductor through which the DC power output from the isolated conversion circuit 12 to the first communication module 10 is supplied and the metal part 3 of the first unit housing 22, the conductor being a conductor on the negative potential side that is the voltage reference, or a conductor on the positive potential side that is at a higher potential than the negative potential side. The configuration with this feature is the capacitor connection configuration described above.

In the first and second examples of the electrical device 90 shown in FIGS. 1 and 2, examples are shown in which the capacitor 17 is disposed between the ground (negative potential side) of the first communication module 10 and the metal part 3 of the first unit housing 22. The example in which the capacitor 17 is disposed between the positive potential side of the first communication module 10 and the metal part 3 of the first unit housing 22 is the third example of the electrical device 90 (refer to FIG. 10) described below. Note that it is further desirable to dispose the capacitor 17 between the metal part 3 of the first unit housing 22 and those of the positive potential side and the ground (negative potential side) of the first communication module 10.

In the first example of the electrical device 90 shown in FIG. 1, the second communication module 11 of the second unit 2 and the metal part 24 of the second unit housing 23 are not connected by a wire and are DC isolated. When the reference potential of the second communication module 11 is defined to be reference potential 3 and the reference potential of the metal part 24 of the second unit housing 23 is defined to be reference potential 4, a potential difference is generated during operation of the second unit 2 because of the DC insulation between the conductor where the reference potential 3 is being generated and the conductor where the reference potential 4 is being generated.

When there is no metal part 24 in the second unit housing 23, as in the second example of the electrical device 90 shown in FIG. 2, there is no need to consider the potential difference between the second communication module 11 and the second unit housing 23. When there is the metal part 24 in the second unit housing 23, as in the first example of the electrical device 90 shown in FIG. 1, the capacitor may be disposed between the conductor in which the reference potential 3 is generated and the conductor in which the reference potential 4 is generated.

That is, a capacitor similar to the capacitor 17 may be disposed between the positive potential side or ground (negative potential side) of the DC power supplied to the second communication module 11 and the metal part 24 of the second unit housing 23. When appropriate, the conductor where the reference potential 3 is being generated or to be generated and the conductor where the reference potential 4 is being generated or to be generated are denoted as the conductor of reference potential 3 and the conductor of reference potential 4.

Isolation between the conductors of reference potential 1 and reference potential 2 can be made for the DC power (DC current and DC voltage) by non-connection or other means. However, with respect to an alternating current or an alternating voltage such as switching noise, AC isolation cannot be made only by not connecting the conductor of the reference potential 1 to the conductor of the reference potential 2. In general, it is difficult to obtain high isolation against AC power by a method other than electric shielding, magnetic shielding, and a sufficient distance apart, because of parasitic capacitance caused by the structure of the first unit housing 22 and the first unit board 28. It has become increasingly difficult to suppress the parasitic capacitance of the first unit 1 in small, high-density packaging of recent power electronics devices.

As a result, the parasitic capacitance in the first unit 1 varies greatly depending on installation of cable such as the power supply line 15 and the communication line 16 and mounting of circuit components, and routing of the wiring patterns on the first unit board 28, during manufacturing, etc. In other words, the parasitic capacitance of the first unit 1 varies greatly depending on the design on the distance between the circuit components or the wiring patterns and the first unit housing 22, etc.

When the parasitic capacitance of the first unit 1 varies, the resonance frequency of the noise associated with the parasitic capacitance changes and the frequency characteristics of the switching noise changes significantly, making it difficult to control the switching noise that leaks into the power supply line 15 or communication line 16 at the design stage.

The parasitic capacitance caused by cable routing during manufacturing may cause problems due to noise such as the switching noise under actual usage environment even if there is no problem such as the switching noise during testing. In contrast, as in the electrical device 90 of Embodiment 1, by attaching the capacitor 17 between the first communication module 10 and the metal part 3 of the first unit housing 22 that are DC isolated, the impedance to noise can be controlled by the capacitor 17, independent of the parasitic capacitance of the first unit 1. As a result, a propagation path of the switching noise can be controlled at the design stage, so that the switching noise is prevented from flowing into an unintended path such as the power supply 4. The electrical device 90 of Embodiment 1 has an advantage in that the switching noise leaking into the power supply line 15 or the communication line 16 can be controlled.

Propagation of the switching noise will be described using FIGS. 7 to 9. An electrical device 91 of Comparative Example 1 shown in FIG. 7 includes a first unit 92 and a second unit 93, and the communication line 16 and the power supply line 15 are connected between the first unit 92 and the second unit 93. The electrical device 91 of Comparative Example 1 differs from the second example of electrical device 90 shown in FIG. 2 in the following five points. The first difference is that in the first unit 92, only a first communication module 95 is used instead of the first signal isolation circuit 13 and the first communication module 10.

The second difference is that the DC power is directly supplied to the first communication module 95 from the converter circuit 30 without the isolated conversion circuit 12, and the third difference is that there is no capacitor 17. The fourth difference is that in the second unit 93, instead of the second signal isolation circuit 14 and the second communication module 11, there is only a second communication module 96, and the fifth difference is that the DC power is directly supplied to the second communication module 96 from the converter circuit 46 (omitted in FIG. 7) without the isolated conversion circuit 20. In FIG. 7, wiring from the first unit board 28, the second unit board 29, the converter circuit 46, and the second load equipment 9 to the second communication module 96 is omitted. Note that parasitic capacitance 18 between the power supply line 15 and the communication line 16 is shown.

A communication signal generated by the first communication module 95 is transmitted to the second unit 93 by the communication line 16. The communication line 16 and the power supply line 15 run parallel to each other and are wired between the first unit 92 and the second unit 93. Therefore, the parasitic capacitance 18 is occurred between the communication line 16 and the power supply line 15. If the communication line 16 is a conductor wire such as metal, the wire length should be 100 m or less when the communication signal is transmitted through the communication line 16. If the length is longer than that, the signal waveform will become dull and the communication signal will deteriorate, and thus it is desirable to use a repeater.

In the electrical device 90 of Embodiment 1, the communication signal generated by the first communication module 10 is also transmitted to the second unit 2 through the communication line 16 via the first signal isolation circuit 13. The communication line 16 and the power supply line 15 run parallel to each other and are wired between the first unit 1 and the second unit 2. Therefore, the parasitic capacitance 18 (see FIG. 7) is occurred between the communication line 16 and the power supply line 15. If the communication line 16 is a conductor wire, the wire length should be 100 m or less when the communication signal is transmitted through the communication line 16.

If the length is longer than that, the signal waveform becomes dull and the communication signal deteriorates, and thus it is desirable to use a repeater. Even when the repeater is used, the power supplied to the repeater needs to be DC isolated from the power supplied to the power conversion circuit 45 of the first load equipment 7. Note that, if the positive potential side or ground (negative potential side) of the DC power supplied to the first signal isolation circuit 13 fluctuates by noise, the noise may propagate to the communication line 16 due to the effect of the fluctuation of the positive potential side or ground (negative potential side) in the first signal isolation circuit 13.

In general, the receiving side that receives a communication signal has high impedance. When a single communication line 16 is used for transmission and reception, ends of the communication line between the first unit 1 and the second unit 2 (first unit communication line end, second unit communication line end), and ends of communication line between the first unit 92 and the second unit 93 (first unit communication line end, second unit communication line end) have high impedance. In the electrical device 90 of Embodiment 1 and the electrical device 91 of Comparative Example 1, since the first unit communication line end and the second unit communication line end of the communication line 16 have high impedance, current does not flow easily in the communication line 16, and the capacitance value of the parasitic capacitance 18 between the communication line 16 and the power supply line 15 is relatively small.

The voltage of the communication signal flowing through the communication line 16 is different from the voltage of the power supplied to the power supply line 15. Therefore, if the communication line 16 and the power supply line 15 run parallel to each other, and thus the capacitance value of the parasitic capacitance 18 tends to increase, the noise superimposed on the communication signal flows from the communication line 16 to the power supply line 15 having lower impedance through the parasitic capacitance 18, not to the communication line 16 having higher impedance on the receiving side as shown in FIG. 7.

Impedance of the first noise filter 5 is designed to remove the switching noise output from the first load equipment 7 including power conversion circuits 45 such as the converter circuit, an inverter circuit, and to prevent the switching noise from propagating to the power supply 4 that is the AC power supply. That is, the impedance of the first noise filter 5 is designed in such a way that the impedance is high with respect to the AC power and attenuation characteristics are large.

A capacitance value C of the parasitic capacitance between two conductors, not limited to the parasitic capacitance between the power supply line 15 and the communication line 16, can be calculated using Equation (1) for a typical device, where the permittivity of vacuum is $\varepsilon_0$, the relative permittivity between two conductors is $\varepsilon_r$, the distance is d [m], and the overlap area is S [m$^2$].

$$C = \varepsilon_0 \times \varepsilon_r \times S / d \qquad\qquad ...(1)$$

Since the parasitic capacitance is usually small and less than 100 pF, calculated from the Equation (1), the impedance of the noise filter is usually higher than the impedance depending on the capacitance of 100 pF. As a result, as shown in a noise propagation path 19a in FIG. 7, and from the current divider rule, much of the switching noise does not pass through the first noise filter 5, but is mixed from the power conversion circuit 45 to the first communication module 95 and the communication line 16.

When the capacitor 6 is not connected between the metal part 3 of the first unit housing 22 and the first noise filter 5, the noise entering the first communication module 95 flows to the power supply line 15 due to the parasitic capacitance 18, and flows to the first load equipment 7 via a return path of the AC power supply 4 and the first noise filter 5. When the capacitor 6 is connected between the first noise filter 5 and the metal part 3 of the first unit housing 22, the impedance of the capacitor 6 is low with respect to the AC power, and thus a low-impedance path back to the first load equipment 7 is formed from the capacitor 6 via the metal part 3 of the first unit housing 22 and the first noise filter 5.

The electrical device 91 of Comparative Example 2 shown in FIG. 8 differs from the electrical device 91 of Comparative Example 1 in that capacitors 94a and 94b are added. The capacitor 94a is connected between the communication line 16 and the metal part 3 of the first unit housing 22 in the first unit 92, and the capacitor 94b is connected between the communication line 16 and the power supply line 15 in the second unit 93. The capacitors 94a and 94b correspond to the capacitor connected between the outdoor communication module and the metal bottom plate of the outdoor unit housing and the capacitor connected between the communication line and the power supply line in FIG. 5 of the air conditioner of Patent Document 1.

In the electrical device 91 of Comparative Example 2, since the capacitor 94a is added, the switching noise generated by the first load equipment 7 flows to the capacitor 94a as shown in a noise propagation path 19b in FIG. 8. The electrical device 91 of Comparative Example 2 can reduce the switching noise that leaks into the power supply line 15 compared with the electrical device 91 of Comparative Example 1. However, due to the capacitor 94a between the communication line 16 and the metal part 3 of the first unit housing 22, an AC component of noise including the switching noise of the first load equipment 7 flows into the first communication module 95 due to parasitic capacitance (not shown) between the wiring of the board on which the first communication module 95, etc. are mounted and the first communication module 95, resulting in the deterioration of quality of the communication signal.

Since there is a potential difference between the first communication module 95 and the metal part 3 of the first unit housing 22, parasitic capacitance (not shown) between the first communication module 95 and the metal part 3 of the first unit housing 22 causes switching noise flowing in the metal part 3 of the first unit housing 22 to flow into the first communication module 95 via the capacitor 94a. As a result, the switching noise is mixed in the DC power supply lines (DC power source lines) in the first communication module 95.

Thus, the driving power of the semiconductor elements in the first communication module 95 fluctuates due to the DC power supply lines (positive potential side power supply line, negative potential side power supply line) in the first communication module 95, and a communication signal superimposed with the noise of the fluctuating DC power is output from the first communication module 95. Note that the negative potential side power supply line is the ground line of the first communication module 95. Since the voltage of the communication signal is generated on the basis of the DC power supplied to the semiconductor elements in the first communication module 95, the DC power driving the semiconductor elements, namely the voltage of the DC power supply line in the first communication module 95, fluctuates, so that the voltage of the communication signal fluctuates with respect to the potential of the system isolated from the first communication module 95, such as the metal part 3 of the first unit housing 22.

The quality of the communication signal flowing through the communication line 16 can be confirmed by examining the temporal variation of the potential difference between the power supply line 15 and the communication line 16 or the temporal variation of the current flowing between the first communication module 95 and the communication line 16. By examining the quality of the communication signal flowing through the communication line 16, which is not performed in a normal switching noise test, it has been found that the switching noise generated in the first load equipment 7 is mixed in the first communication module 95 to deteriorate the quality of the communication signal communicated between the separated boards could be confirmed.

In addition, since the electrical device 91 of Comparative Example 2 has a capacitor 94b, not only the switching noise flowing in the metal part 3 of the first unit housing 22 of the first unit 92, but also the switching noise flowing in the power supply line 15 is mixed in the communication line 16, causing the communication quality to further deteriorate. This is because larger switching noise is superimposed on the power supply line 15 than on the communication line 16, and it is not possible to make the first noise filter 5 that can completely remove the switching noise. As a result, even if the switching noise flowing in the power supply line 15 can be reduced by the capacitor 94b, it is difficult to maintain the same level of quality in the communication signal compared with the case without the capacitor 94b because the capacitor 94b causes the switching noise to mix in the communication line 16.

The switching noise that leaks into the first communication module 10 in the electrical device 90 of Embodiment 1 will be described using FIG. 9. In Embodiment 1, since the isolated conversion circuit 12 is interposed between the first load equipment 7 and the first communication module 10, and DC power isolated from the DC power supplied to the first load equipment 7 is supplied to the first communication module 10, the switching noise from the first load equipment 7 is mixed in the communication module 10 via the parasitic capacitance 18 shown in FIG. 9. The switching noise that is mixed via the parasitic capacitance 18 is small compared with the switching noise that propagates through the conductive line as in Comparative Example 1 and Comparative Example 2.

In the electrical device 90 of Embodiment 1, the switching noise generated in the first load equipment 7 propagates as shown in the noise propagation path 19c. The switching noise mixed into the first communication module 10 flows through the capacitor 17 to the first load equipment 7 via a return path of the metal part 3 of the first unit housing 22, the capacitor 6, and the first noise filter 5.

In the electrical device 90 of Embodiment 1, since the first signal isolation circuit 13 provides the DC isolation between the first communication module 10 and the communication line 16 running to the second unit 2, the impedance of the second communication module 11 of the second unit 2 when seen from the first communication module 10 is high. Therefore, if the capacitor 17 exists between the ground (negative potential side) of the one side to which the DC power is supplied in the first communication module 10 and the metal part 3 of the first unit housing 22, the switching noise propagated from the first load equipment 7 flows to the metal part 3 of the first unit housing 22 through the capacitor 17.

The metal part 3 of the first unit housing 22 of the first unit 1 is a return path for the switching noise caused by the first load equipment 7. The presence of the capacitor 17 causes the ground potential of the first communication module 10 to fluctuate at the same timing as the potential of the metal part 3 of the first unit housing 22. By installing the capacitor 17 between the first communication module 10 and the metal part 3 of the first unit housing 22, the ground of the first communication module 10 and the metal part 3 of the first unit housing 22 are at the same potential with respect to the AC power, so that the communication signal of the first communication module 10 does not fluctuate with respect to the potential of the metal part 3 of the first unit housing 22.

Therefore, the electrical device 90 of Embodiment 1 can reduce the switching noise into the communication line 16. This does not mean that the signal of the communication line 16 does not fluctuate with respect to the ground potential of the power supply 4, but the signal of the communication line 16 fluctuates in the same phase with the power supply line 15 and the first load equipment 7 which are based on the potential of the metal part 3 of the first unit housing 22 in the first unit 1, and when the ground of the first communication module 10 and the metal part 3 of the first unit housing 22 becomes the same potential with respect to the AC power, the potential difference between the ground of the first communication module 10 and the metal part 3 of the first unit housing 22 becomes constant with respect to the AC power including the switching noise, and thus the signal of the communication line 16 does not fluctuate.

In the first and second examples of the electrical device 90 shown in FIGS. 1 and 2, examples are shown in which the capacitor 17 is disposed between the ground (negative potential side) of the DC power supplied to the first communication module 10 and the metal part 3 of the first unit housing 22. However, as shown in FIG. 10, a capacitor 17b may be disposed between the positive potential side of the DC power supplied to the first communication module 10 and the metal part 3 of the first unit housing 22.

In FIG. 10, an example is shown in which a capacitor 17a is also disposed between the ground (negative potential side) of the DC power supplied to the first communication module 10 and the metal part 3 of the first unit housing 22. The sign 17 is collectively used for the capacitors connected between the first communication module 10 and the metal part 3 of the first unit housing 22. When there is more than one capacitor connected between the first communication module 10 and the metal part 3 of the first unit housing 22 and distinction thereof is made, the signs 17a and 17b are used.

Even when the capacitor 17b is disposed between the positive potential side of the DC power supplied to the first communication module 10 and the metal part 3 of the first unit housing 22, the effect is the same as when the capacitor 17a is attached to the ground (negative potential side) of the DC power supplied to the first communication module 10. Since the positive potential side and the ground (negative potential side) of the DC power supplied to the first communication module 10 are DC isolated with respect to the potential of the metal part 3 of the first unit housing 22 in the first unit 1, the potential difference is undefined with respect to the potential of the metal part 3 of the first unit housing 22 in the first unit 1, and thus the effect can be obtained regardless of the wire side to which the capacitor is attached. As the repetitive description for the above, it is even more desirable to attach the capacitor 17 between the metal part 3 of the first unit housing 22 and the positive potential side and ground (negative potential side) of the first communication module 10, as shown in FIG. 10.

The switching noise mixed in the communication line 16 and the switching noise mixed in the power supply line 15 are usually different from each other. The switching noise of the power supply line 15 may be referred to as conducted emission, or conducted noise, power supply noise, noise terminal voltage, terminal noise, or the like. Since the power supply line 15 and the communication line 16 in the first unit 1 often run to be kept close to (come close to) the metal part 3 of the first unit housing 22 in the first unit 1 within several centimeters, parasitic capacitance is easily occurred between them and the metal part 3 of the first unit housing 22, and thus they are not isolated from the AC power including the switching noise.

However, in the electrical device 90 of Embodiment 1, since the capacitor 17 is disposed between the positive potential side or ground (negative potential side) of the DC power supplied to the first communication module 10 and the metal part 3 of the first unit housing 22, the switching noise mixed in the power supply 4 can be reduced without affecting the quality of the communication signal transmitted between the separated boards, namely the first unit board 28 of the first unit 1 and the second unit board 29 of the second unit 2.

In the electrical device 90 of Embodiment 1, in the first communication module 10 which is DC isolated from the metal part 3 of the first unit housing 22, the switching noise leaking into the communication line 16 can be reduced while maintaining the isolation from the metal part 3 of the first unit housing 22. Therefore, the electrical device 90 of Embodiment 1 can reduce the risk of malfunction of the electrical device 90 due to deterioration of the communication signal between the first unit 1 and the second unit 2. Further, the electrical device 90 of Embodiment 1 can reduce the switching noise superimposed on the power supply line 15, and as a result, it is also possible to reduce switching noise mixed in external units supplied with the power from the power supply 4 other than the first unit 1 and the second unit 2.

An example of a transmission circuit 65 of the first communication module 10 will be described. The transmission circuit 65 shown in FIGS. 4 and 5 is composed of a combination of an operational amplifier 60 and resistors 61a and 61b, and an amplification factor of the operational amplifier 60 is changed by changing values of the resistors 61a and 61b. The transmission circuit 65 includes input pins 81a and 81b and output pins 82a and 82b, and an input signal 62 as a communication signal processed by the signal processing circuit 66 is input from the input pins 81a and 81b, and an output signal 63 is output from the output pin 82a.

The input pin 81b and the output pin 82b are connected to a negative potential power supply line 69 to which the DC power of the negative potential side (ground) generated by the isolated conversion circuit 12 is supplied. That is, the negative potential power supply line 69 and the power supply line on the negative output side for outputting from the isolated conversion circuit 12 to the first communication module 10 are connected to each other.

The operational amplifier 60 is driven by a driving power supply 68. The driving power supply 68 is a DC power supply for supplying the DC power generated by the isolated conversion circuit 12. Specifically, the driving power supply 68 is a DC power supply line on the positive potential side (positive potential side power supply line) within the first communication module 10. That is, the positive output side DC power supply line is connected to the positive potential side power supply line. One end of the resistor 61a is connected to the input pin 81a, and the other end of the resistor 61a is connected to the inverting pin of the operational amplifier 60 and one end of the resistor 61b. The other end of the resistor 61b is connected to the output pin 82a.

The non-inverting pin of the operational amplifier 60 is connected to the DC power supply line on the negative potential side (negative potential side power supply line 69). In FIGS. 4 and 5, the input signal 62 and the output signal 63 are shown as voltage signals based on the potential of the negative potential side DC power supply line (negative potential side power supply line 69) connected to the input pin 81b and the output pin 82b, that is, the potential of the ground of the DC power (negative potential side) generated by the isolated conversion circuit 12. The negative potential side DC power supply line (negative potential side power supply line 69) connected to the input pin 81b and the output pin 82b is connected to the metal part 3 of the first unit housing 22 via the capacitor 17. FIG. 4 shows an example in which a capacitor 67 is connected between the driving power supply 68 and the metal part 3 of the first unit housing 22.

Assuming that V1 is the voltage of the signal to the ground input to the inverting pin of the operational amplifier 60, V2 is the voltage of the signal to the ground input to the non-inverting pin, R1 is the value of the resistor 61a on the input side, and R2 is the value of the resistor 61b on the output side, output voltage V0 of the output signal 63 can be expressed by Equation (2).

$$V0 = - (R2/R1) V1 + (R1 + R2) V2 / R1 \qquad ...(2)$$

The DC power supply line (positive potential power supply line, negative potential power supply line 69) to which DC power is supplied to the operational amplifier 60 is DC isolated from the metal part 3 of the first unit housing 22. In the transmission circuit 65 shown in FIG. 4, the capacitor 67 is provided between the driving power supply 68 of the operational amplifier 60 and the metal part 3 of the first unit housing 22, so that noise propagation from the power conversion circuit 45 as the noise source can be controlled.

In the case where the capacitor 17 and the capacitor 67 are not provided with respect to the metal part 3 of the first unit housing 22, parasitic capacitance allows AC conduction for AC components of the noise between the first communication module 10 or the first signal isolation circuit 13 or the communication line 16 and the metal part 3 of the first unit housing 22. Thus, the parasitic capacitance cannot be ignored in a frequency range from 10 kHz to 1 GHz such as the switching noise. Therefore, when the capacitor 17 and the capacitor 67 are not provided with respect to the metal part 3 of the first unit housing 22, the propagation of the switching noise cannot be controlled, and as a result, the noise leaking into the power supply 4 cannot be reduced.

In contrast, in Embodiment 1, in the case where the DC power supply lines (positive potential side power supply line, negative potential side power supply line 69) that supply the DC power to the communication line 16 and the first communication module 10 are DC isolated from the metal part 3 of the first unit housing 22, the fact found that the propagation of the switching noise can be controlled by attaching the capacitor 17 and the capacitor 67 between the DC power supply lines (positive potential side power supply line, negative potential side power supply line 69) in the circuit such as the first communication module 10 and the metal part 3 of the first unit housing 22 is important for the low-noise designing in the first and second units 1 and 2.

As described above, in the air conditioner of Patent Document 1, the switching noise of the inverter device is mixed in the communication line, and the quality of the communication signal flowing through the communication line is deteriorated. As a result of examining the above problem, it has been found that although mixing of the switching noise in the communication line can be reduced by reducing the capacitance value of the communication line capacitor of Patent Document 1, it is not possible to reduce the switching noise leaking into the power supply 4.

Further examination revealed a problem that the switching noise is mixed in the communication line 16 at the timing when switching is performed (on and off timing) in the switching elements of the power conversion circuit 45. In order to reduce the switching noise leaking into the power supply 4, as described above, the capacitor 17 is disposed between the positive potential side or ground (negative potential side) of the DC power supplied to the first communication module 10 and the metal part 3 of the first unit housing 22. The capacitor 67 shown in FIG. 4 has the same function as the capacitor 17b shown in FIG. 10. Therefore, in the case where the transmission circuit 65 of the first communication module 10 in the first example and the second example of the electrical device 90 shown in FIGS. 1 and 2 is the first example of the transmission circuit 65 shown in FIG. 4, the same effect as the third example of the electrical device 90 shown in FIG. 10 is obtained.

As shown in FIG. 5, the transmission circuit may be a circuit such that the capacitor 67 is not connected between the driving power supply 68 and the metal part 3 of the first unit housing 22, and the DC power supply line on the negative potential side of the operational amplifier 60 (negative potential side power supply line 69) is connected to the metal part 3 of the first unit housing 22 via the capacitor 17. This transmission circuit can also control the propagation of noise from the power conversion circuit 45 as the noise source.

Even if the DC power supply line (negative potential side power supply line 69) is connected to the metal part 3 of the first unit housing 22 through the capacitor 17, the DC isolation between the DC power supply line (positive potential side power supply line, negative potential side power supply line 69) of the operational amplifier 60 and the metal part 3 of the first unit housing 22 can be maintained. The capacitor 17 shown in FIGS. 4 and 5 indicates the capacitor 17 connected between the first communication module 10 and the metal part 3 of the first unit housing 22 in FIGS. 1 and 2. The capacitor 17 connected between the first communication module 10 and the metal part 3 of the first unit housing 22 in FIGS. 1 and 2 indicates that it is connected to the DC power supply line (negative potential side power supply line) in the first communication module 10. Therefore, the capacitor 17 shown in FIGS. 1 and 2 may be the same as the capacitor 17 shown in FIGS. 4 and 5, and the capacitor 17 shown in FIGS. 4 and 5 may be a different capacitor from the capacitor 17 shown in FIGS. 1 and 2.

Examples of the electrical device 90 in which the power supply 4 is an AC power supply are described so far, but the power supply 4 may also be a DC power supply. The fourth example of the electrical device 90 shown in FIG. 11 is an electrical device in which the power supply 4 is a DC power supply. The fourth example of the electrical device 90 shown in FIG. 11 differs from the first example of the electrical device 90 shown in FIG. 1 in that there is no converter circuit 30, and not by the DC power of the converter circuit 46 of the second load equipment 9, the DC power after passing through the second noise filter 8 is supplied to the isolated conversion circuit 20.

In the fourth example of the electrical device 90, the capacitor 17 is also disposed between the positive potential side or ground (negative potential side) of the DC power supplied to the first communication module 10 and the metal part 3 of the first unit housing 22, so that the quality of the communication signal communicated between the separated boards, namely the first unit board 28 of the first unit 1 and the second unit board 29 of the second unit 2, is not affected and the switching noise that is mixed in the power supply 4 can be reduced.

As described above, the electrical device 90 of Embodiment 1 is an electrical device to which power is supplied from the power supply 4 and which communicates via the communication line 16 between the first board (first unit board 28) and the second board (second unit board 29) that are separated. The electrical device 90 of Embodiment 1 includes: the first board (first unit board 28) housed in the housing (first unit housing 22) including the metal part 3; the power conversion circuit 45 includes the switching element (semiconductor element 55); the first communication module 10; the first signal isolation circuit 13 that allows the communication signal to pass while isolating the first communication module 10 from the communication line 16; the first isolated conversion circuit (isolated conversion circuit 12) that supplies DC power isolated from power supplied to the power conversion circuit 45, to the first communication module 10; the second board (second unit board 29) housed in another housing (second unit housing 23); the second communication module 11 performs communication with the first communication module 10; the second signal isolation circuit 14 that allows the communication signal to pass while isolating the second communication module 11 from the communication line 16; and the second isolated conversion circuit (isolated conversion circuit 20) that supplies DC power isolated from power supplied to the power conversion circuit 45, to the second communication module 11.

The power conversion circuit 45, the first communication module 10, the first signal isolation circuit 13, the first isolated conversion circuit (isolated conversion circuit 12) are mounted on the first board (first unit board 28); and the second communication module 11, the second signal isolation circuit 14, second isolated conversion circuit (isolated conversion circuit 20) are mounted on the second board (second unit board 29). The electrical device 90 of Embodiment 1 includes the capacitor 17 that is connected between the conductor to which the DC power output to the first communication module 10 from the first isolated conversion circuit (isolated conversion circuit 12) is supplied and the metal part 3 of the housing (first unit housing 22), the conductor being a conductor on the negative potential side serving as a voltage reference or a conductor on the positive potential side which is at a higher potential than the negative potential side.

With the configuration described above, the electrical device 90 of Embodiment 1 can reduce the switching noise mixed in the power supply 4 without affecting the quality of communication signal communicated between the separated boards, namely the first board (first unit board 28) and the second board (second unit board 29).

Embodiment 2

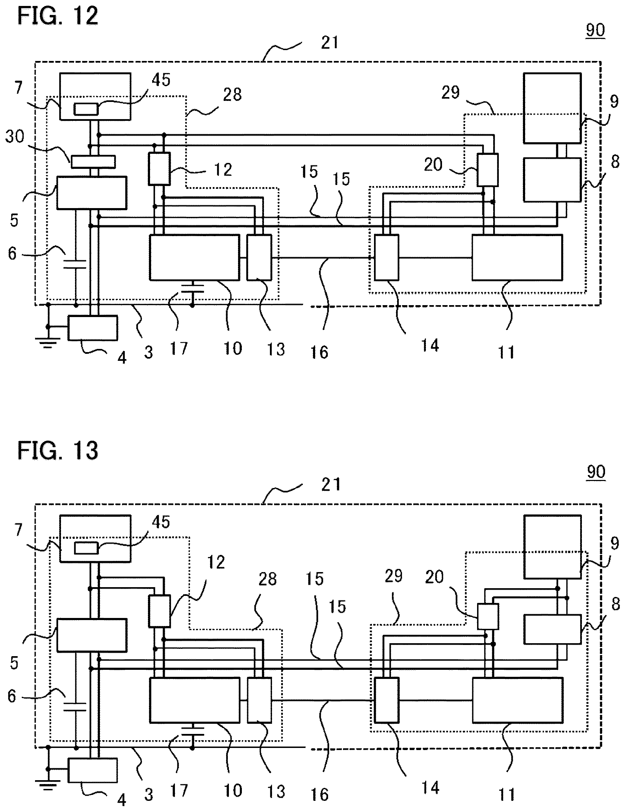

In Embodiment 1, the electrical device 90 in which the first unit board 28 and the second unit board 29 that are separated are mounted on different unit housings is described, but the first unit board 28 and the second unit board 29 that are separated may be mounted on the same unit housing 21. FIG. 12 shows a first example of an electrical device according to Embodiment 2, and FIG. 13 shows a second example of the electrical device according to Embodiment 2. The first example of the electrical device 90 of Embodiment 2 shown in FIG. 12 is an electrical device that is powered by the power supply 4 that is an AC power supply and operates. The second example of the electrical device 90 of Embodiment 2 shown in FIG. 13 is an electrical device that is powered by the power supply 4 that is a DC power supply and operates.

The first example of the electrical device 90 of Embodiment 2 shown in FIG. 12 differs from the first example of the electrical device 90 of Embodiment 1 shown in FIG. 1 in that it has an unit housing 21 instead of the first unit housing 22 and the second unit housing 23, there is no converter circuit 46 in the second load equipment 9, and DC power is supplied from the converter circuit 30 to the isolated conversion circuit 20. The first example of the electrical device 90 of Embodiment 2 is similar to the first example of the electrical device 90 of Embodiment 1 in that the capacitor 17 is disposed between the positive potential side or ground (negative potential side) of the DC power supplied to the first communication module 10 and the metal part 3 of the unit housing 21.

In FIG. 12, an example is shown in which the capacitor 17 is disposed between the ground (negative potential side) of the first communication module 10 and the metal part 3 of the unit housing 21. In the case where the capacitor 17 is connected between the positive potential side of the DC power supplied to the first communication module 10 and the metal part 3 of the unit housing 21, the connection is made in the same way as the capacitor 17b in FIG. 10.

In the first example of the electrical device 90 of Embodiment 2, the capacitor 17 is disposed between the positive potential side or ground (negative potential side) of the DC power supplied to the first communication module 10 and the metal part 3 of the unit housing 21, so that the switching noise mixed in the power supply 4 can be reduced without affecting the quality of the communication signal communicated between the separated boards, namely the first unit board 28 and the second unit board 29.

The second example of the electrical device 90 of Embodiment 2 shown in FIG. 13 differs from the first example of the electrical device 90 of Embodiment 2 shown in FIG. 12 in that there is no converter circuit 30 and DC power after passing through the second noise filter 8 is supplied to the isolated conversion circuit 20. The second example of the electrical device 90 of Embodiment 2 is similar to the first example of the electrical device 90 of Embodiment 2 in that the capacitor 17 is disposed between the positive potential side or ground (negative potential side) of the DC power supplied to the first communication module 10 and the metal part 3 of the unit housing 21.

In FIG. 13, an example is shown in which the capacitor 17 is disposed between the ground (negative potential side) of the first communication module 10 and the metal part 3 of the unit housing 21. In the case where the capacitor 17 is connected between the positive potential side of the DC power supplied to the first communication module 10 and the metal part 3 of the unit housing 21, the connection is made in the same way as the capacitor 17b in FIG. 10.

In the second example of the electrical device 90 of Embodiment 2, the capacitor 17 is disposed between the positive potential side or ground (negative potential side) of the DC power supplied to the first communication module 10 and the metal part 3 of the unit housing 21, so that the switching noise mixed in the power supply 4 can be reduced without affecting the quality of the communication signal communicated between the separated boards, namely the first unit board 28 and the second unit board 29.

The electrical apparatus 90 of Embodiment 2 can reduce the switching noise leaking into the communication line 16 while maintaining isolation to the metal part 3 of the unit housing 21 in the first communication module 10 and the second communication module 11 that are DC isolated from the metal part 3 of the unit housing 21. Therefore, the electrical device 90 of Embodiment 2 can reduce the noise leaking into the power supply 4 that supplies power to the electrical device including those of the first communication module 10 and the second communication module 11. In addition, in the electrical device 90 of Embodiment 2, since the electric potential between the first communication module 10 and the metal part 3 of the unit housing 21 is stabilized, the risk of malfunction of the electrical device 90 due to deterioration of the communication signal transmitted through the communication line 16 can be reduced.

As described above, the electrical device 90 of Embodiment 2 is an electrical device to which power is supplied from the power supply 4 and which communicates via the communication line 16 between the first board (first unit board 28) and the second board (second unit board 29) that are separated. The electrical device 90 of Embodiment 2 includes: the first board (first unit board 28) housed in the housing (unit housing 21) including the metal part 3; the power conversion circuit 45 includes the switching element (semiconductor element 55); the first communication module 10; the first signal isolation circuit 13 that allows the communication signal to pass while isolating the first communication module 10 from the communication line 16; the first isolated conversion circuit (isolated conversion circuit 12) that supplies DC power isolated from power supplied to the power conversion circuit 45, to the first communication module 10; the second board (second unit board 29) housed in the housing (unit housing 21); the second communication module 11 performs communication with the first communication module 10; the second signal isolation circuit 14 that allows the communication signal to pass while isolating the second communication module 11 from the communication line 16; and the second isolated conversion circuit (isolated conversion circuit 20) that supplies DC power isolated from power supplied to the power conversion circuit 45, to the second communication module 11.

The power conversion circuit 45, the first communication module 10, the first signal isolation circuit 13, the first isolated conversion circuit (isolated conversion circuit 12) are mounted on the first board (first unit board 28); and the second communication module 11, the second signal isolation circuit 14, second isolated conversion circuit (isolated conversion circuit 20) are mounted on the second board (second unit board 29).

The electrical device 90 of Embodiment 2 includes the capacitor 17 that is connected between the conductor to which the DC power output to the first communication module 10 from the first isolated conversion circuit (isolated conversion circuit 12) is supplied and the metal part 3 of the housing (unit housing 21), the conductor being a conductor on the negative potential side serving as a voltage reference or a conductor on the positive potential side which is at a higher potential than the negative potential side. With the configuration described above, the electrical device 90 of Embodiment 2 can reduce the switching noise mixed in the power supply 4 without affecting the quality of communication signal communicated between the separated boards, namely the first board (first unit board 28) and the second board (second unit board 29).

Embodiment 3

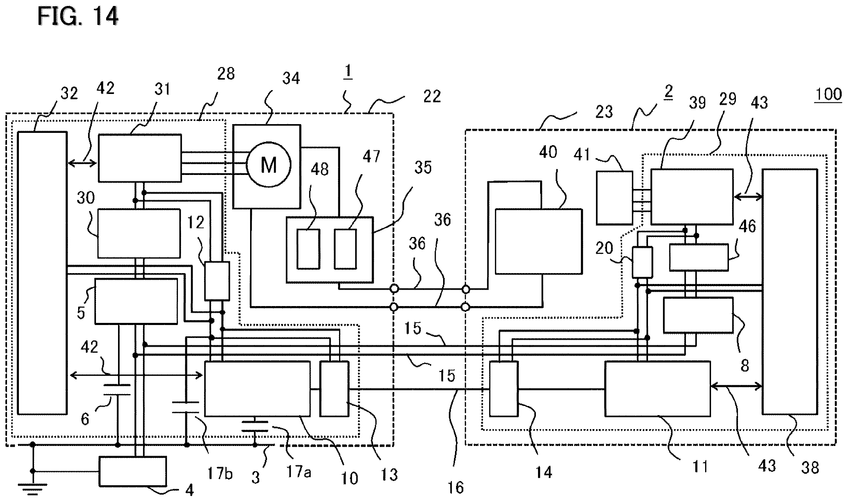

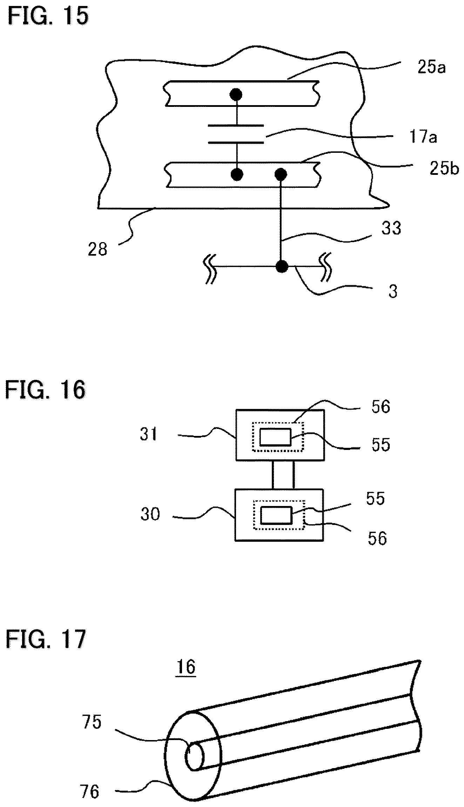

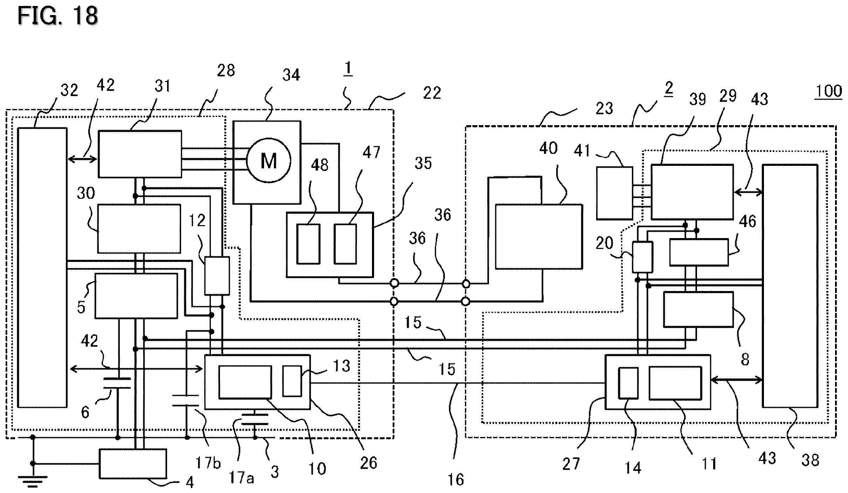

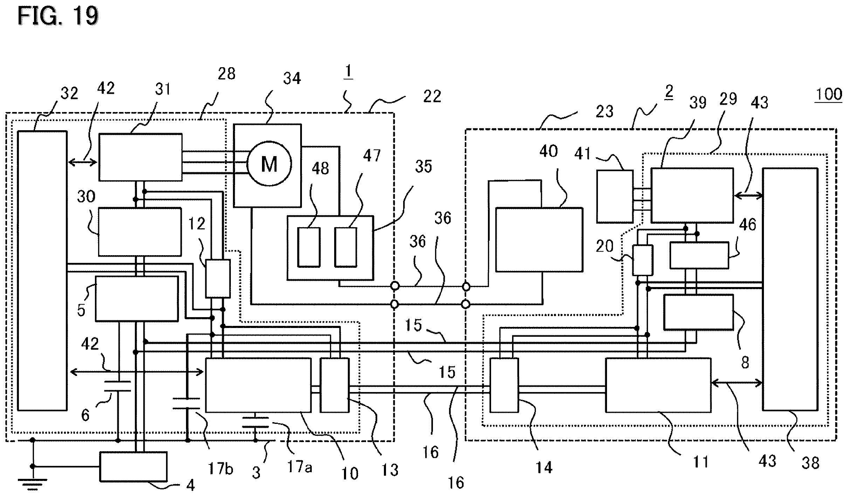

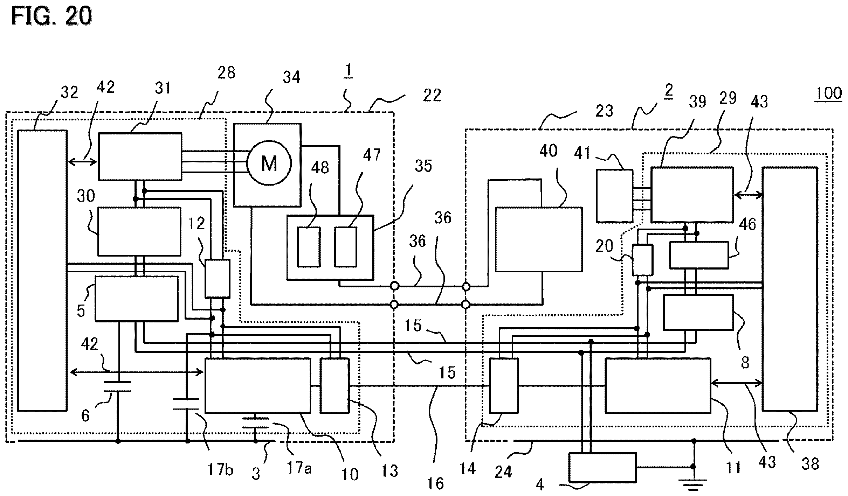

FIG. 14 is a diagram showing a first example of an air conditioner according to Embodiment 3. FIG. 15 is a diagram showing an example of a capacitor connection between the first communication module and the metal part in FIG. 14, and FIG. 16 is a diagram showing a semiconductor element and a heat sink mounted on each of the converter circuit and the first inverter circuit in FIG. 14. FIG. 17 is a diagram showing an example of the communication line of FIG. 14. FIG. 18 is a diagram showing a second example of the air conditioner according to Embodiment 3, and FIG. 19 is a diagram showing a third example of the air conditioner according to Embodiment 3. FIG. 20 is a diagram showing a fourth example of the air conditioner according to Embodiment 3. The air conditioner 100 of Embodiment 3 includes the first unit 1 and the second unit 2.

The first unit 1 of the air conditioner 100 is an outdoor unit, and the second unit 2 of the air conditioner 100 is an indoor unit. When appropriate, the first unit 1 is referred to as the outdoor unit 1 and the second unit 2 is referred to as the indoor unit 2.

The air conditioner 100 of Embodiment 3 has a similar configuration as the electrical device 90 shown in Embodiment 1. The first unit housing 22 of the outdoor unit 1 is provided with at least a compressor 34, an outdoor heat exchanger 35, the converter circuit 30, a first inverter circuit 31, the first communication module 10, the first signal isolation circuit 13 for DC isolation between the first communication module 10 and the communication line 16 connected to the indoor unit 2, the isolated conversion circuit 12 for supplying the DC power from the converter circuit 30 to the first communication module 10 and the first signal isolation circuit 13, the first noise filter 5, the first unit board 28, and an outdoor control circuit 32 for controlling the converter circuit 30 and the like. In FIG. 14, a control signal 42 by which the outdoor control circuit 32 controls the first signal isolation circuit 13 and the control signal 42 by which the outdoor control circuit 32 controls the first inverter circuit 31 are shown.

The indoor unit 2 is provided with at least an indoor heat exchanger 40, an indoor blower 41, a second inverter circuit 39 for operating the indoor blower 41, the second noise filter 8, the second communication module 11, the second signal isolation circuit 14 for DC isolation between the second communication module 11 and the communication line 16 connected to the outdoor unit 1, the isolated conversion circuit 20 that supplies DC power to the second communication module 11 and the second signal isolation circuit 14, the second unit board 29, and an indoor control circuit 38 for controlling an indoor blower 41 and the like. In FIG. 14, a control signal 43 by which the indoor control circuit 38 controls the second communication module 11 and the control signal 43 by which the indoor control circuit 38 controls the second inverter circuit 39 are shown.

The outdoor unit 1 is operated by power supplied by the power supply 4 that is an AC power supply. The indoor unit 2 is also operated by the power of the power supply 4 through the outdoor unit 1. The outdoor unit 1 and the indoor unit 2 communicate with each other via the communication line 16. The indoor unit 2 is operated by the AC power supplied from the outdoor unit 1 via the power supply line 15. The compressor 34 and the outdoor heat exchanger 35 in the outdoor unit 1 and the indoor heat exchanger 40 of the indoor unit 2 are connected by a refrigerant pipe 36. The refrigerant pipe 36 connects the outdoor heat exchanger 35 and the indoor heat exchanger 40 and is the pipe through which refrigerant circulates.

The outdoor unit 1 shown in FIG. 14 is provided with the first unit housing 22, the first noise filter 5, the converter circuit 30, the first inverter circuit 31, the outdoor control circuit 32, the compressor 34, the outdoor heat exchanger 35, the isolated conversion circuit 12, the first communication module 10, the first signal isolation circuit 13, the first unit board 28, the capacitor 6 connected between the metal part 3 of the first unit housing 22 and the first noise filter 5, the capacitor 17a connected between the metal part 3 of the first unit housing 22 and the first communication module 10, and the capacitor 17b connected between the positive potential side of the DC power supplied to the first communication module 10 (refer to FIG. 10) and the metal part 3 of the first unit housing 22.

On the first unit board 28, the outdoor control circuit 32, the first noise filter 5, the converter circuit 30, the first inverter circuit 31, the isolated conversion circuit 12, the first communication module 10, the first signal isolation circuit 13, the capacitor 6, and the capacitors 17a and 17b are mounted. The first inverter circuit 31 corresponds to the power conversion circuit 45 of the first load equipment 7 shown in FIG. 1. The compressor 34 and the outdoor heat exchanger 35 are examples of devices that are not mounted on the first unit board 28 in the first load equipment 7 shown in FIG. 1. The outdoor control circuit 32 controls the converter circuit 30, the first inverter circuit 31, and the first communication module 10. The outdoor heat exchanger 35 has the refrigerant pipe 36 for heat exchange, a fin 47 connected to the refrigerant pipe 36, and a fan 48 for blowing air to the refrigerant pipe 36 and the fin 47.

The indoor unit 2 shown in FIG. 14 is provided with the second unit housing 23, the second noise filter 8, the converter circuit 46, the second inverter circuit 39, the indoor control circuit 38, the indoor heat exchanger 40, the indoor blower 41, the isolated conversion circuit 20, the second communication module 11, the second signal isolation circuit 14, and the second unit board 29. On the second unit board 29, the indoor control circuit 38, the second noise filter 8, the converter circuit 46, the second inverter circuit 39, the isolated conversion circuit 20, the second communication module 11, and the second signal isolation circuit 14 are mounted.

The converter circuit 46 and the second inverter circuit 39 are examples of the circuits mounted on the second unit board 29 in the second load equipment 9 shown in FIG. 1. The indoor heat exchanger 40 and the indoor blower 41 are examples of devices that are not mounted on the second unit board 29 in the second load equipment 9 shown in FIG. 1. The indoor control circuit 38 controls the second communication module 11 and the second signal isolation circuit 14 and controls the indoor blower 41 via the second inverter circuit 39.

Since the converter circuit 30 and the first inverter circuit 31 intendedly switch the switching elements, switching noise is generated. The power supply 4 that is the AC power supply may be installed on the outdoor unit 1 side and the power is transmitted to the indoor unit 2 by the power supply line 15 as shown in FIG. 14 or may be installed on the indoor unit 2 side and the power is transmitted to the outdoor unit 1 by the power supply line 15 as shown in FIG. 20. This is because the converter circuit 30, the first inverter circuit 31, and the compressor 34 on the outdoor unit 1 side generate the switching noise into the communication line 16.

Thus, the quality of the communication signal is degraded when the switching noise in the outdoor unit 1 is mixed in the communication line 16. Therefore, the power supply 4 may be connected to either the outdoor unit 1 or the indoor unit 2. Note that, in FIG. 14, an example is shown in which the second unit housing 23 does not have the metal part 24, while in FIG. 20, an example is shown in which the second unit housing 23 has the metal part 24. In the case where AC power is supplied from the indoor unit 2 by the power supply 4, the power supply 4 and the metal part 24 of the second unit housing 23 are connected.

The outdoor unit 1 and the indoor unit 2 are connected to each other by the power supply line 15 with at least two or more wires, the communication line 16 with one or more wires, and a forward and backward path of refrigerant pipe 36. In some cases, the power supply line 15 and communication line 16 are grouped together as a single unit and wrapped around them with a tape or other means. In some cases, the power supply line 15, the communication line 16, and the refrigerant pipe 36 are grouped together as a single unit and wrapped around them with a tape or the like. If the communication line 16 is a single wire, the return path of the communication signal is often the power supply line 15 or the refrigerant pipe 36.

Even in the case in which the communication line 16 with two or more wires is provided as shown in FIG. 19, only one capacitor 17a may be connected between the first communication module 10 and the metal part 3 of the first unit housing 22. This is because it is sufficient that the DC power supplied to the first communication module 10 does not fluctuate with respect to the metal part 3 of the first unit housing 22. The capacitor 17a is a capacitor between the ground (negative potential side) of the DC power supplied to the first communication module 10 and the metal part 3 of the first unit housing 22, and suppresses the fluctuation of the ground (negative potential side) of the DC power with respect to the metal part 3 of the first unit housing 22.

The capacitor 17b shown in FIG. 14 is a capacitor between the positive potential side of the DC power supplied to the first communication module 10 and the metal part 3 of the first unit housing 22, and suppresses the fluctuation of the positive potential side of the DC power with respect to the metal part 3 of the first unit housing 22. Although the capacitor 17b may not be necessary, an example with the capacitor 17b is shown in FIG. 14. In a case where the DC power supplied to the first communication module 10 is also supplied to the first signal isolation circuit 13 that is a photo-coupler, there is no problem even if there are multiple first signal isolation circuits 13, as long as the capacitor 17a is connected between the first communication module 10 and the metal part 3 of the first unit housing 22. In a case where the first signal isolation circuit 13 is an isolation transformer, there is no problem even if there are multiple first signal isolation circuits 13, as long as the capacitor 17a is connected between the first communication module 10 and the metal part 3 of the first unit housing 22.

When the communication line 16 is a single wire, communication is performed from the indoor unit 2 to the outdoor unit 1 and from the outdoor unit 1 to the indoor unit 2 by time sharing. In that case, time waveform of the communication signal communicated through the communication line 16 can be of any form. The return path of the communication signal is the power supply line 15 or the refrigerant pipe 36, which is a line other than the communication line 16, as described above. Usually, both the power supply line 15 and the refrigerant pipe 36 are the return path for the communication signal.

Although the communication line 16 and the refrigerant pipe 36 are isolated with each other with respect to DC power, but AC current corresponding to the communication signal of the communication line 16 also flows through the refrigerant pipe 36 due to parasitic capacitance because the communication line 16 and the refrigerant pipe 36 are wrapped around together with a tape or the like. In addition, although the communication line 16 and the power supply line 15 are isolated with each other with respect to DC power, but the current of the communication line 16 also flows in the power supply line 15 due to parasitic capacitance because the communication line 16 and the power supply line 15 are wrapped around together with a tape or the like.

A capacitor may be connected between the communication line 16 and the refrigerant pipe 36. The capacitor connected between the communication line 16 and the refrigerant pipe 36 causes an AC current corresponding to the communication signal of the communication line 16 to flow, and the refrigerant pipe 36 becomes a return path for the communication signal. A capacitor may also be connected between the communication line 16 and the power supply line 15. The capacitor connected between the communication line 16 and the power supply line 15 causes current of the communication line 16 to flow, and the power supply line 15 becomes a return path for the communication signal.

Since the capacitor 17a is provided between the ground (negative potential side) of the DC power supplied to the first communication module 10 and the metal part 3 of the first unit housing 22, or the capacitor 17b is provided between the positive potential side of the DC power supplied to the first communication module 10 and the metal part 3 of the first unit housing 22, the switching noise leaking into the communication line 16 can be reduced even if the capacitor is connected between the communication line 16 and the power supply line 15 or the refrigerant pipe 36, which is the return path of the communication signal.

In the case where the communication line 16 has two wires, communication from the indoor unit 2 to the outdoor unit 1 and from the outdoor unit 1 to the indoor unit 2 is performed in time sharing with one wire used for forward path and the other wire used for backward path. Of the two wires in the case where the communication line 16 has two wires, one wire is used for communication from the indoor unit 2 to the outdoor unit 1 and the other wire is used for communication from the outdoor unit 1 to the indoor unit 2, and the return path of the communication signal may be the refrigerant pipe 36 or the power supply line 15.

The distance between the indoor unit 2 and the outdoor unit 1 is less than 100 meters in many cases. However, when the distance between the indoor unit 2 and the outdoor unit 1 is more than 100 meters, a shielded cable (refer to FIG. 17) is often used for the communication line 16. When the communication line 16 is the shielded cable, a core wire 75 of the shielded cable is the forward path of communication signal and an outer conductor 76 is the return path of communication signal. The core wire 75 and the outer conductor 76 of the shielded cable are connected to the insulated conversion circuit 12 and the insulated conversion circuit 20. In the case where an optical fiber is used for the communication line 16, the optical fiber does not propagate electromagnetic noise.

However, even if the communication line 16 is the optical fiber, capacitors 17a and 17b are disposed between the positive potential side or ground (negative potential side) of the DC power supplied to the first communication module 10 and the metal part 3 of the first unit housing 22, the switching noise mixed in the first communication module 10 can be reduced, and the quality of communication signal communicated between the outdoor unit 1 and the indoor unit 2 can be enhanced.

The compressor 34 operates using the AC power of the first inverter circuit 31 generated by the first unit board 28. The refrigerant heated or cooled by the compressor 34, the fan 48 and the fin 47 of the outdoor heat exchanger 35 is sent to the indoor unit 2 via the refrigerant pipe 36. The indoor unit 2 provides warm or cold air to the user of the air conditioner 100 by blowing air from the indoor blower 41 to the indoor heat exchanger 40 where the refrigerant sent from the outdoor unit 1 flows in.

The received and transmitted signals, namely the communication signals, flowing in the communication line 16 are DC isolated between the outdoor unit 1 and the indoor unit 2 by the first signal isolation circuit 13 and the second signal isolation circuit 14 such as photo-couplers and isolation transformers.

The DC power generated by the converter circuit 30 is supplied to the first communication module 10 through the isolated conversion circuit 12 that is an isolation type DC-DC converter. Further, the same DC power as that for the first communication module 10 is supplied to the outdoor control circuit 32 that controls the first signal isolation circuit 13 and the first communication module 10, etc. The first signal isolation circuit 13 and the outdoor control circuit 32 are operated with the same DC power as that for the first communication module 10.

However, in the case where the first signal isolation circuit 13 and the outdoor control circuit 32 are operated with DC power of voltage different from that of the first communication module 10, an isolation type DC-DC converter that is separate from the isolated conversion circuit 12 or an isolation type AC-DC converter separate from the isolated conversion circuit 12 may be used to operate them with DC power isolated from the AC power supply 4.

When the outdoor unit 1 is provided with two isolated conversion circuits 12, the potential difference between the AC components in the respective DC power outputs by the two isolated conversion circuits 12 is reduced by installing a capacitor between the two isolated conversion circuits 12. In other words, the voltage difference between the AC components of noise mixed in the respective DC power outputs by the two isolated conversion circuits 12 is reduced.

Alternatively, a capacitor is provided between each of the two isolated conversion circuits 12 and the metal part 3 of the first unit housing 22. When a capacitor is connected between each of the two isolated conversion circuits 12 and the metal part 3 of the first unit housing 22, a connecting member 33 (refer to FIG. 15) which is a jumper wire or a metal spacer is generally used between the terminal of the capacitor and the metal part 3 of the first unit housing 22. It is desirable that the jumper wire or the metal spacer be short and thick in order to lower residual inductance.

As shown in FIG. 16, it is desirable that the semiconductor element 55 as switching element in the converter circuit 30 and the first inverter circuit 31 which are noise sources should be mounted on the heat sink 56 for cooling the semiconductor element 55. It is desirable to dispose the capacitor 17b between the metal part 3 of the first unit housing 22 that is proximate to (close to) the semiconductor element 55 and the heat sink 56, and the positive potential side of the DC power of the isolated conversion circuit 12 that supplies the DC power to the first communication module 10.

In the case where the semiconductor element 55 is a semiconductor element formed of a wide bandgap semiconductor material having a larger bandgap than that of silicon, namely a wide bandgap semiconductor element, the switching speed is faster and the switching loss is smaller than those of a silicon semiconductor element. Furthermore, the wide bandgap semiconductor element has higher voltage resistance and higher heat resistance than the silicon semiconductor element. Therefore, when the semiconductor element 55 is the wide bandgap semiconductor element, the heat sink 56 can be downsized, and the heat sink 56 may become unnecessary.

Even if the semiconductor element 55 of the wide bandgap semiconductor is not mounted on the heat sink 56, the capacitor 17b is disposed between the metal part 3 of the first unit housing 22 that is close to (near) the semiconductor element 55 and the positive potential side of the DC power of the isolated conversion circuit 12 that supplies the DC power to the first communication module 10, so that the noise reduction effect and the reduction of electromagnetic noise leaking into the communication line 16 can be expected. Wide bandgap semiconductor materials include, for example, silicon carbide (SiC: Silicon Carbide), gallium nitride based materials including gallium nitride (GaN: Gallium Nitride), or diamond.

Since the capacitors 17a and 17b are usually disposed on the first unit board 28 that is a printed circuit board, ends of a plurality of the capacitors 17a and 17b are gathered in a wiring pattern 25b (refer to FIG. 15) on the first unit board 28, and the wiring pattern 25b is connected through the connecting member 33 such as the jumper wire, to the metal part 3 of the first unit housing 22 of the outdoor unit 1. In this way, the number of connection members 33 such as the jumper wires can be reduced.

As for the capacitors 17a and 17b, ceramic capacitors or film capacitors are usually used because they need to have a high withstand voltage. In particular, since the air conditioner 100 is used in various temperature environments, it is desirable to use temperature-compensated ceramic or film capacitors rather than ceramic capacitors with large temperature dependence. Varistors may also be used instead of capacitors 17a and 17b. Unlike a capacitor, a varistor has a large inductance, but when the voltage applied to both ends of the varistor is low, it exhibits equivalently to be a capacitor. For the capacitors 17a and 17b, a capacitance value between 500 pF and 5,000 pF is usually used.

The AC power that is transmitted via the power supply line 15 connected to the first unit 1 passes through the second noise filter 8, and then the DC power converted by the converter circuit 46 is supplied to the second communication module 11 through the isolated conversion circuit 20 that is an isolation type DC-DC converter. The same DC power as that for the second communication module 11 is supplied to the indoor control circuit 38 that controls the second signal isolation circuit 14 and the second communication module 11, etc.

The second signal isolation circuit 14 and the indoor control circuit 38 are operated with the same DC power as that of the second communication module 11. However, in the case where the second signal isolation circuit 14 and the indoor control circuit 38 are operated with DC power of voltage different from that of the second communication module 11, an isolation type DC-DC converter or an isolation type AC-DC converter separate from the isolated conversion circuit 20 may be used to operate them with the DC power isolated from the power supply line 15.

It is desirable that the size of the air conditioner 100 be small, and thus when mounting the first communication module 10, the first signal isolation circuit 13, the first noise filter 5, the converter circuit 30, and the first inverter circuit 31 in the air conditioner 100 with limited dimensions, they are usually mounted on the same first unit board 28 as shown in FIG. 14. Further, those circuits may be mounted on multiple boards, and the boards may be connected to each other using board-to-board connectors.

In particular, it is often the case that the first communication module 10 and the first signal isolation circuit 13 and the other circuits are placed in close proximity (come close to each other) within 10 cm. Also, in many cases, wiring patterns connected to the first communication module 10 and the first signal isolation circuit 13 and the other circuits are placed in close proximity (disposed close to each other). This is because, in order to dynamically change the operation of the compressor 34 and the fan 48 of the outdoor heat exchanger 35 via the converter circuit 30 and the first inverter circuit 31, communication signals, namely feedback information, etc., transmitted from the indoor unit 2 side are necessary, and they are determined by the received signals received from the indoor unit 2 by the first communication module 10.

However, when the converter circuit 30 and the first inverter circuit 31 that are noise sources are disposed in close proximity to the first communication module 10 and the first signal isolation circuit 13 (closely disposed), electric field coupling or magnetic field coupling occurs. Parasitic capacitance is occurred in electric field coupling, and mutual inductance is occurred in magnetic field coupling, creating a path for electromagnetic noise to propagate through space to the surrounding area.

When the converter circuit 30 and the first inverter circuit 31 that are noise sources are disposed in close proximity (closely disposed) to the first communication module 10 and the first signal isolation circuit 13 on the first equipment board 28, parasitic capacitance having a very large capacitance value is occurred between, for example, the first communication module 10 or a wiring pattern connected to the first communication module 10, and the circuits that are the converter circuit 30 and the first inverter circuit 31.

Even when parasitic capacitance exists between the first communication module 10 and the converter circuit 30 and between the first communication module 10 and the first inverter circuit 31, if there is no potential difference, unnecessary AC power, namely an AC component of noise, does not flow through the space between conductors. However, in the case where the capacitor 17a is not connected between the ground (negative potential side) of the DC power supplied to the first communication module 10 and the metal part 3 of the first unit housing 22 or the capacitor 17b is not connected between the positive potential side of the DC power supplied to the first communication module 10 and the metal part 3 of the first unit housing 22, which is not the case in the air conditioner 100 of Embodiment 3, the potential between the first communication module 10 and the metal part 3 of the first unit housing 22 with respect to the high frequency components of the noise becomes indefinite, and the reference potential between the first communication module 10 and those of the converter circuit 30 and the first inverter circuit 31 is different, and thus the switching noise propagates through the space. As a result, the switching noise generated in the converter circuit 30 and the first inverter circuit 31 flows from the power supply line 15, the converter circuit 30, and the first inverter circuit 31 toward the communication line 16 and the first communication module 10.

In general, a circuit designed to be DC isolated on the schematic diagram becomes a circuit that is not isolated from AC current or AC voltage owing to the arrangement of circuit components on the same board, namely a circuit in which AC current or AC voltage propagates. As a result, the problem of switching noise propagating into paths that are not supposed to be propagated arises.

The switching noise in the air conditioner is generated owing to sudden temporal changes or resonance phenomena in the voltage and current at the time when switching elements in the converter circuit 30, the first inverter circuit 31, or the like switch. In particular, the switching waveform in the time domain can be thought of as a trapezoidal wave. When the trapezoidal wave is Fourier transformed, depending on rise and fall times, for example, it can be seen that a time waveform with the rise time of several tens of nanoseconds will generate harmonic noise ranging from several tens of kHz to several GHz.

The permissible range of the switching noise that is high-frequency noise including these harmonics propagating between conductors is determined by an international standard. For example, the International Electrotechnical Commission (IEC) defines the standard values in the range of 150 kHz to 30 MHz. In addition, the IEC defines the standard values in the range of 30 MHz to 1 GHz for radiated noise that is high-frequency noise emitted from a conductor into space. Note that, it is desirable that such high-frequency noise should not exist because it can cause malfunction of devices or damage to electronic circuits inside the devices.

The frequency of the communication signal of the air conditioner is usually about 10 Hz to 10 kHz. In contrast, IEC defines the international standard of noise to be at 150 kHz, and the frequency of the international standard for the noise flowing through the power supply line 15 is higher than the operating frequency of the communication signal of the air conditioner.

The current path for the return in the communication line 16 between the outdoor unit 1 and the indoor unit 2, namely the return current path, is the power supply line 15 or the refrigerant pipe 36. In the outdoor unit 1, in the case where the capacitor 17a is not connected between the ground (negative potential side) of the DC power supplied to the first communication module 10 and the metal part 3 of the first unit housing 22, or the capacitor 17b is not connected between the positive potential side of the DC power supplied to the first communication module 10 and the metal part 3 of the first unit housing 22, which is not the case in the air conditioner 100 of Embodiment 3, a part of the propagation path of the switching noise is formed by the parasitic capacitance or the mutual inductance between conductive wires such as the communication line 16, the power supply line 15 that are disposed between the second unit board 29 and the second unit housing 23 in the indoor unit 2 and the first unit board 28 and the first unit housing 22 in the outdoor unit 1.

The parasitic capacitance causes switching noise to mix in accordance with the magnitude of the time derivative of voltage, and the mutual inductance causes switching noise to mix in accordance with the time derivative of current. As far as the communication line 16 is concerned, as described before, because the circuit on the receiving side receives signals through the high impedance, little current flows. Therefore, the effect of the mutual inductance is small, and thus the propagation path of the switching noise due to the parasitic capacitance will be described.

Compared with the outdoor unit 1, the current and voltage of the indoor unit 2 are smaller and the noise level is lower. Therefore, although the indoor unit 2 becomes a propagation path for the noise propagated from the outdoor unit 1 due to parasitic capacitance, etc., the indoor unit 2 rarely becomes a noise source. In other words, although the effect of the parasitic capacitance exists in the indoor unit 2, the voltage of the indoor unit 2 or of the communication line 16 is smaller than the voltage concerned in the outdoor unit 1, and thus the outdoor unit 1 or the communication line 16 becomes the main propagation path of the switching noise.

As a result, by attaching the capacitor 17a between the conductor of the reference potential 1 which is the reference potential of the first communication module 10 and the conductor of the reference potential 2 which is the potential of the metal part 3 of the first unit housing 22 in the outdoor unit 1, an advantageous effect can be obtained such that the switching noise mixed in the communication line 16 and the power supply line 15 is reduced in the same way as the electrical device 90 of Embodiment 1.

An example of the mounting of the capacitor 17a in the first unit board 28 is shown in FIG. 15. In the first unit board 28 in the outdoor unit 1, the wiring pattern 25b with the same potential as the metal part 3 of the first unit housing 22 is formed, and the wiring pattern 25b is connected to the metal part 3 of the first unit housing 22 with the connecting member 33 such as the jumper wire or the metal spacer. The capacitor 17a is provided between the wiring pattern 25b and the wiring pattern 25a that is at the potential of the reference potential 1.

For the connecting member 33, which is the jumper wire or a conductor spacer, it is desirable to shorten the wiring length of the connecting member 33 because the residual inductance thereof is preferably smaller. Furthermore, it is desirable to make the connecting member 33 thicker. These will reduce the residual inductance to obtain a desirable result.

Parasitic capacitance causes series or parallel resonance due to the residual inductance, a normal mode coil, a common mode coil, and other circuit components, making a significant change in impedance. The parasitic capacitance also changes in the way the wiring is routed during installation of the air conditioner 100 and during its production. Thus, parasitic components including the parasitic capacitance are typically occurred unintendedly and a resonant circuit is formed, and thus quantitative prediction thereof at the design stage is difficult.

In contrast, by attaching the capacitor 17a between the ground (positive potential side) of the first communication module 10 and the metal part 3 of the first unit housing 22, as in the present embodiment, the capacitor 17a can be made to be the current path for the dominant switching noise. The reason for this is that the capacitance value of the capacitor 17a is sufficiently larger than the aforementioned parasitic capacitance occurred between the ground (negative potential side), which is at the potential of the reference potential 1 of the first communication module 10, and the conductors of reference potential of the first noise filter 5, converter circuit 30, and first inverter circuit 31, thereby making the impedance be small.

Further, by attaching the capacitor 17b between the positive potential side of the DC power supplied to the first communication module 10 and the metal part 3 of the first unit housing 22, the capacitor 17b can also be made to be the current path for the dominant switching noise. The reason for this is that the capacitance value of the capacitor 17b is sufficiently larger, compared with the aforementioned parasitic capacitance occurred between the positive potential side of the DC power supplied to the first communication module 10 and the conductors of reference potential of the first noise filter 5, the converter circuit 30, and the first inverter circuit 31, thereby making the impedance be small.

As a result, the current path of the switching noise can be made constant regardless of the routing of the wiring in the air conditioner 100. For example, the current of the noise flowing through the capacitors can be made sufficiently dominant by making the capacitance of the attached capacitors 17a and 17b several 100 pF or more in contrast to the parasitic capacitance being several 10 pF or less.

The communication signal from the first communication module 10 to the first signal isolation circuit 13 or from the first signal isolation circuit 13 to the indoor unit 2 generates a leakage current passing through the capacitor 6 connected to the first noise filter 5 or passing through parasitic capacitance described below as A1 to A3. The parasitic capacitance A1 is parasitic capacitance between the first unit housing 22 and a reactor for the step-up/step-down (not shown), the parasitic capacitance A2 is parasitic capacitance between the first unit housing 22 and the compressor 34, and the parasitic capacitance A3 is parasitic capacitance between the first unit housing 22 and the first unit board 28.

The path that generates the leakage current due to the communication signal often has high impedance, and as a result, the switching noise in the converter circuit 30 or the first inverter circuit 31, which has relatively low impedance, is mixed in the first communication module 10 or the first signal isolation circuit 13. For example, the capacitance value of the capacitor 6 connected to the first noise filter 5 is the maximum and usually about 5,000 pF. The parasitic capacitance value of the first unit housing 22 and the reactor for the step-up/step-down is the minimum and usually about 100 pF. The parasitic capacitance value of the first unit housing 22 and the compressor 34 is in between these and is usually around 500 pF, although it is not constant as it varies with the movement of the refrigerant.

In contrast, by intendedly disposing the capacitor 17a between the metal part 3 of the first unit housing 22 of the outdoor unit 1 and the ground (negative potential side) of the first communication module 10, or by intendedly disposing the capacitor 17b between the metal part 3 of the first unit housing 22 of the outdoor unit 1 and the positive potential side of the DC power supplied to the first communication module 10, the impedance due to the capacitors 17a and 17b can be made lower than the impedance of the paths through the others of parasitic capacitance. As a result, the leakage current due to the communication signal through these capacitors 17a and 17b becomes dominant, and the communication signal can flow in a path that is less affected by the parasitic capacitance and the propagation paths of the communication signal.

Furthermore, since the first communication module 10, the first signal isolation circuit 13, the first noise filter 5, the first inverter circuit 31, etc., are all based on the potential of the metal part 3 of the first unit housing 22 in the first unit 1, the potential of the first communication module 10 and the first signal isolation circuit 13 can be made equal to the potential of the first noise filter 5, the first inverter circuit 31, etc., and thus the switching noise to the power supply line 15 can be reduced.

Next, the reason why the switching noise mixed in the communication line 16 is reduced by attaching the capacitor 17a between the ground (negative potential side) where the reference potential 1 of the first communication module 10 is generated and the metal part 3 of the first unit housing 22 where the reference potential 2 is generated will be described. It has been found that there is a correlation between the noise that is mixed in the first communication module 10 and the output power obtained by the switching of the converter circuit 30 and the first inverter circuit 31. This led us to find out that the noise mixed in the first communication module 10 is caused by the output power obtained by the switching of the converter circuit 30 and the first inverter circuit 31.

Unlike the air conditioner 100 of Embodiment 3, when the capacitors 17a and 17b are not provided, the ground (negative potential side) where the reference potential 1 of the first communication module 10 is generated and the metal part 3 of the first unit housing 22 where the reference potential 2 is generated are DC isolated to each other, so that only the switching noise component of AC is mixed in the ground (negative potential side) of the first communication module 10 or the positive potential side of the DC power supplied to the first communication module 10 due to the parasitic capacitance. Thus, in the case where capacitors 17a and 17b are not provided, the cause of the superimposition of the switching noise on the communication signal of the communication line 16 is that the circuits that are the noise sources and the first communication module 10 are DC isolated with respect to the metal part 3 of the first unit housing 22, and thus the circuits of the noise sources and the first communication module 10 operate on the basis of different potentials, and thereby the switching noise is mixed in the first communication module 10.

When the capacitors 17a and 17b are provided as in the air conditioner 100 of Embodiment 3, the potential between the ground (negative potential side) where the reference potential 1 of the first communication module 10 is generated and the metal part 3 of the first unit housing 22 where the reference potential 2 is generated is equalized with respect to the AC power including the switching noise, the potential of the ground (negative potential side) where the reference potential 1 of the first communication module 10 is generated changes at the same timing as the potentials of the metal part 3 of the first unit housing 22 and the refrigerant pipe 36, etc., and thereby the potential difference is hard to occur. As a result, the potential difference between the reference potential of the circuits that are the noise sources with respect to the metal part 3 of the first unit housing 22, namely the ground (negative potential side) of the circuits that are the noise sources, and the reference potential 1 of the first communication module 10 becomes small.

There is a difference in meaning between making the positive potential side or ground (negative potential side) of the DC power supplied to the first communication module 10 the same potential in terms of AC with respect to the metal part 3 of the first unit housing 22 in which the reference potential 2 is generated (making the same potential in terms of AC) and making the communication line 16 and the metal part 3 of the first unit housing 22 in the outdoor unit 1 the same potential for the communication signal that is an AC signal.

This is because the positive potential side or ground (negative potential side) of the DC power supplied to the first communication module 10 is for the flow of the DC power, while the communication line 16 is for the flow of the AC signal. If it is a DC power supply, namely the isolated conversion circuit 12 that supplies the DC power to the first communication module 10, the switching noise can be reduced by connecting the capacitors 17a and 17b without affecting the power supply 4 that is the AC power supply. In contrast, for the communication signal that is the AC signal, it is not possible to install the capacitors without affecting the communication signal. Therefore, it is desirable to adopt a capacitor connection configuration in which the capacitors 17a and 17b are disposed with respect to the DC power supply, namely the positive potential side or ground (negative potential side) of the DC power of the isolated conversion circuit 12 supplied to the first communication module 10, as in the present embodiment.

By making the positive potential side or ground (negative potential side) of the DC power supplied to the first communication module 10 and the metal part 3 of the first unit housing 22 where the reference potential 2 is generated the same potential in terms of AC, the communication signal can be generated on the basis of the DC power supply that does not contain the switching noise when the communication signal is generated. Therefore, the air conditioner 100 of Embodiment 3 can reduce the influence of the switching noise of the converter circuit 30 and the first inverter circuit 31.

In contrast, making the communication line 16 and the metal part 3 of the first unit housing 22 the same potential in terms of AC means that a conductor in which a signal based on a different potential is flowing to the communication signal already generated by the first communication module 10 is attached, so that the switching noise flowing in the metal part 3 of the first unit housing 22 is mixed in the communication signal.

In the air conditioner 100 of Embodiment 3, by attaching capacitors 17a and 17b to the positive potential side or ground (negative potential side) of the DC power in the isolated conversion circuit 12 corresponding to the DC power supply that supplies the DC power in the first communication module 10, it is possible to prevent a potential difference from occurring between the ground (negative potential side) of the first communication module 10 and the metal part 3 of the first unit housing 22, thereby reducing the switching noise that is mixed in the communication signal.

Regarding the way the capacitor 17a is attached, as described above, the capacitor 17a is connected between the wiring pattern 25a on the first unit board 28 where the reference potential 1 of the first communication module 10 is generated and the wiring pattern 25b. The wiring pattern 25b is connected to the metal part 3 of the first unit housing 22 through the connecting member 33 such as the jumper wire or the metal spacer.

In the same way, one end of the capacitor 17b is attached to the positive potential side of the DC power of the isolated conversion circuit 12 that is a driving power supply for operating namely driving the first communication module 10. Further, the other end of the capacitor 17b is attached to the metal part 3 of the first unit housing 22 with the connecting member 33 such as the jumper wire or the metall spacer through the wiring pattern of the first unit board 28. The other end of the capacitor 17b may be connected to the wiring pattern 25b shown in FIG. 15 or may be connected to a wiring pattern different from the wiring pattern 25b.

The first communication module 10 and the first signal isolation circuit 13 that is the photo-coupler or the isolation transformer may be integrated as shown in FIG. 18. In the same way, the second communication module 11 and the second signal isolation circuit 14 that is the photo-coupler or the isolation transformer may be integrated as shown in FIG. 18. A first communication module 26 shown in FIG. 18 is a communication module in which the first communication module 10 and the first signal isolation circuit 13 in the outdoor unit 1 (first unit 1) are integrated, and a second communication module 27 is a communication module in which the second communication module 11 and the second signal isolation circuit 14 in the indoor unit 2 (second unit 2) are integrated.

In addition, between the communication line 16 and the first signal isolation circuit 13 and between the communication line 16 and the second signal isolation circuit 14, a circuit for stabilizing the potential of the receiver circuit 64 (refer to FIG. 3), such as a half-wave rectifier circuit, a full-wave rectifier circuit, a comparator circuit, or a Schmitt trigger circuit, may be provided. There are devices that use power line communication (PLC) using the power supply line 15. Since the air conditioner 100 of Embodiment 3 is an air conditioner including at least one or more wires for the communication line 16, even if it is applied to a device configured to perform communication using only the power supply line 15, an effect of reducing both the switching noise flowing through the power supply line 15 and the switching noise leaking into the communication line 16 to improve the quality of the communication signal cannot be obtained.

The power supply 4 that is the AC power supply for operating the air conditioner 100 is provided in the indoor unit 2 or the outdoor unit 1 as described above. The air conditioner may be such that the power is supplied from the indoor unit 2 to the outdoor unit 1 as shown in FIG. 20, or from the outdoor unit 1 to the indoor unit 2 as shown in FIG. 14. In particular, in the air conditioner 100 in which one indoor unit 2 is connected to one outdoor unit 1, the power supply 4 that is the AC power supply is connected to the indoor unit 2 in many cases, and in the air conditioner 100 in which a plurality of indoor units 2 are connected to one outdoor unit 1, the power supply 4 is connected to the outdoor unit 1 in many cases.

In either case, by applying the capacitor connection configuration which is a feature of Embodiment 3, namely the configuration in which the capacitor 17b or the capacitor 17a is disposed between the positive potential side or ground (negative potential side) of the DC power supplied to the first communication module 10 and the metal part 3 of the first unit housing 22, it is possible to reduce both the switching noise flowing through the power supply line 15 and the switching noise leaking into the communication line 16.

In the air conditioner 100 of Embodiment 3, since the capacitor 17b or the capacitor 17a is disposed between the positive potential side or ground (negative potential side) of the DC power supplied to the first communication module 10 and the metal part 3 of the first unit housing 22, the switching noise mixed in the power supply 4 can be reduced without affecting the quality of the communication signal communicated between the separated boards, namely the first unit board 28 and the second unit board 29.

In the air conditioner 100 of Embodiment 3, and in the first communication module 10 that is DC isolated from the metal part 3 of the first unit housing 22, the switching noise that leaks into the communication line 16 can be reduced while the isolation from the metal part 3 of the first unit housing 22 is maintained. Therefore, the air conditioner 100 of Embodiment 3 can reduce the risk of malfunction or false detection in the air conditioner 100 due to deterioration of the communication signal between the outdoor unit 1 and the indoor unit 2. Further, the air conditioner 100 of Embodiment 3 can reduce the switching noise superimposed on the power supply line 15, and as a result, it is also possible to reduce switching noise mixed in external units supplied with the power from the power supply 4 other than the first unit 1 and the second unit 2.

As described above, the air conditioner 100 of Embodiment 3 includes: an outdoor unit 1 that includes the compressor 34, the outdoor heat exchanger 35, and the first communication module 10 that are housed in the first housing (first unit housing 22) with the metal part 3; the indoor unit 2 that includes the indoor heat exchanger 40 and the second communication module 11 that are housed in the second housing (second unit housing 23); the refrigerant pipe 36 that connects the outdoor heat exchanger 35 to the indoor heat exchanger 40 and in which refrigerant flows; the communication line 16 in which the communication signal between the first communication module 10 and the second communication module 11 flows, and the power supply line 15 which supplies power to the outdoor unit 1 and the indoor unit 2 from the external power supply that is the power supply 4 outside the first housing (first unit housing 22) and the second housing (second unit housing 23), wherein the communication line 16 and the power supply line 15 or the refrigerant pipe 36 are disposed to run partially in parallel.

The outdoor unit 1 includes: the first board (first unit board 28) housed in the first housing (first unit housing 22); the converter circuit 30 that converts AC power of the external power supply (power supply 4) to DC power; the inverter circuit (first inverter circuit 31) that includes the switching element (semiconductor element 55), converts the DC power output from the converter circuit 30 to AC power, and drives the compressor 34; the first signal isolation circuit 13 that allows the communication signal to pass while isolating the first communication module 10 from the communication line 16; and the first isolated conversion circuit (isolated conversion circuit 12) that supplies DC power isolated from the DC power output from the converter circuit 30, to the first communication module 10, wherein the converter circuit 30, the inverter circuit (first inverter circuit 31), the first communication module 10, the first signal isolation circuit 13, and the first isolated conversion circuit (isolated conversion circuit 12) are mounted on the first board (first unit board 28).

The indoor unit 2 includes: the second board (second unit board 29) housed in the second housing (second unit housing 23); the second signal isolation circuit 14 that allows the communication signal to pass while isolating the second communication module 11 from the communication line 16; and the second isolated conversion circuit (isolated conversion circuit 20) that supplies DC power isolated from power supplied to the inverter circuit (first inverter circuit 31), to the second communication module 11, wherein the second communication module 11 that performs communication with the first communication module 10, the second signal isolation circuit 14, and the second isolated conversion circuit (isolated conversion circuit 20) are mounted on the second board (second unit board 29).

The air conditioner 100 of Embodiment 3 includes the capacitor 17 that is connected between the conductor to which DC power output to the first communication module 10 from the first isolated conversion circuit (isolated conversion circuit 12) is supplied and the metal part 3 of the first housing (first unit housing 22), the conductor being a conductor on the negative potential side serving as a voltage reference or a conductor on the positive potential side which is at a higher potential than the negative potential side. In the air conditioner 100 of Embodiment 3, with the configuration described above, the switching noise mixed in the power supply 4 can be reduced without affecting the quality of the communication signal communicated between the separated boards, namely the first board (first unit board 28) and the second board (second unit board 29).

Embodiment 4

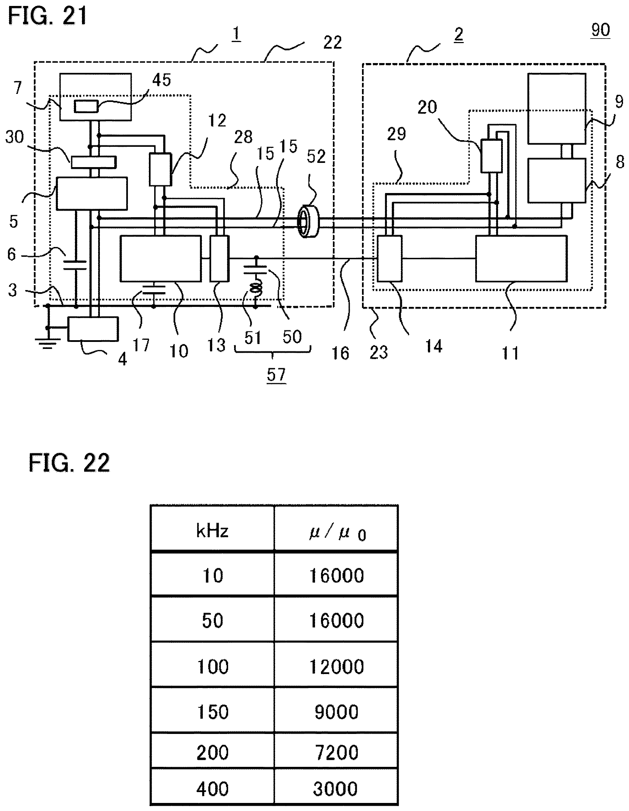

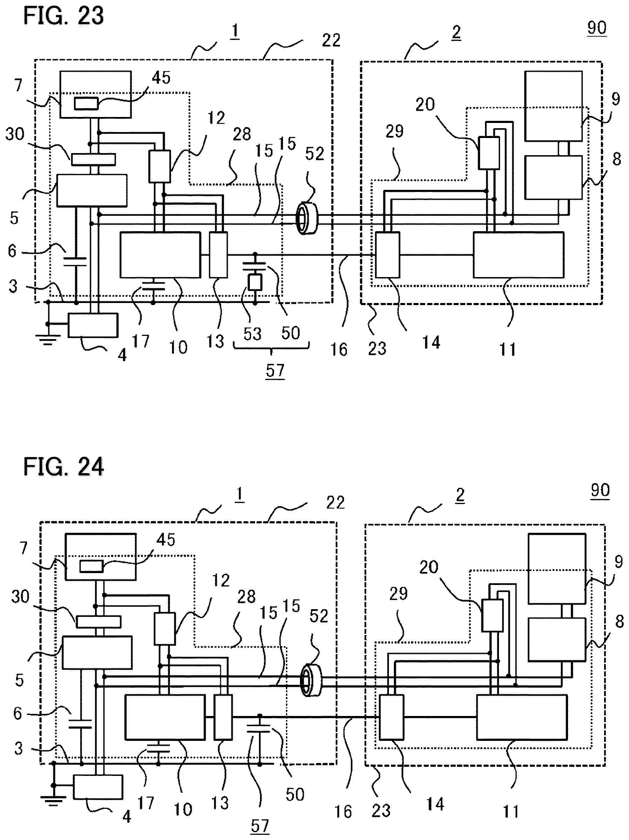

FIG. 21 is a diagram showing an example of an electrical device according to Embodiment 4, and FIG. 22 is a diagram showing an example of frequency characteristics of relative permeability of an inductor component of FIG. 21. FIG. 23 is a diagram showing an example of the electrical device of FIG. 21 for a case where frequencies of noise is low, and FIG. 24 is a diagram showing an example of the electrical device of FIG. 21 for a case where frequencies of noise is high.

The electrical device 90 of Embodiment 4 is different from the electrical device 90 of Embodiment 1 in that a magnetic core 52 is attached to the power supply line 15 in the first unit 1, and an impedance component 57 in which a capacitor component 50 and an inductor component 51 are connected in series is connected between the communication line 16 and the metal part 3 of the first unit housing 22. FIG. 21 illustrates an example in which the magnetic core 52 and the impedance component 57 are added to the electrical device 90 illustrated in FIG. 2.

It is desirable that the magnetic core 52 should be attached in an end portion on the second unit 2 side in the first unit board 28 on which the first communication module 10 and the converter circuit 30 that are on the first unit 1 side are mounted. The magnetic core 52 is attached to the power supply line 15 with the power supply line 15 wound therearound. When the magnetic core 52 is attached in the second unit 2 side, noise leaks into the communication line 16, and thus it is not preferable.

For example, it is attached to a connector end of the first unit board 28. The switching noise of the power supply line 15 can be reduced by increasing the capacitance value of the capacitor component 50 of the impedance component 57 connected between the communication line 16 and the metal part 3 of the first unit housing 22. However, a problem arises in that the noise of the communication line 16 is likely to increase if the capacitance value of the capacitor component 50 is too large.

It has been found that there is a large interdependence between the inductance based on the magnetic core 52 wound around the power supply line 15 and the capacitance of the capacitor in the communication line 16. By providing the power supply line 15 with the magnetic core 52, the capacitance value of the capacitor component 50 can be optimized. The magnetic core 52 will be described in detail in Embodiment 5.

A mechanism by which the switching noise of the power supply line 15 in the electrical device 90 of Embodiment 4 is reduced will be described. Consider the case where the communication line 16 between the first unit 1 and the second unit 2 is a single wire. Since the communication line 16 between the first unit 1 and the second unit 2 is a single wire, a wire that serves as the return path is required when the communication signal flows in the communication line 16. As described in Embodiment 1, the return path is the power supply line 15, etc.

It is desirable that the communication signal should oscillate with respect to the potential of the metal part 3 of the first unit housing 22 in the first unit 1 (reference potential 2). In other words, It is desirable that the communication signal should be an AC signal based on the reference potential 2. However, since the potential of the ground (negative potential side) of the first communication module 10 (reference potential 1) is usually different from the potential of the power supply line 15, there is no return path for the communication signal to flow other than the parasitic capacitance between the communication line 16 and the power supply line 15.

Therefore, if there is no capacitor component 50 between the communication line 16 and the metal part 3 of the first unit housing 22, the propagation path of the communication signal to the power supply line 15 will be through various places of the first unit board 28 via the parasitic capacitance or the capacitor 6 connected to the first noise filter 5. As a result, the communication signal goes through multiple paths and also returns to the power conversion circuit 45 of the first load equipment 7 that is the noise source.

When the communication signal flows into the power supply line 15, which is one of the return paths for the communication signal flowing back to the metal part 3 of the first unit housing 22 that is at the reference potential of the first unit 1 (reference potential 2), the return current of the communication signal is a factor that increases the switching noise of the power supply line 15; namely the electromagnetic noise mixed in the power supply line 15 is increased.

In contrast, as in the electrical device 90 of Embodiment 4,, in the case where the impedance component 57 including capacitor component 50 between the communication line 16 and the metal part 3 of the first unit housing 22 exists, the return current of the communication signal flows in the power supply line 15. This is because the impedance of the impedance component 57 including the capacitor component 50 connected between the communication line 16 and the metal part 3 of the first unit housing 22 is lower than the impedance in the path where the return current of the communication signal passes through the parasitic capacitance and the capacitor 6 connected to the first noise filter 5.

Some consideration needs to be taken when the capacitor component 50 is connected between the communication line 16 and the metal part 3 of the first unit housing 22. By connecting only the capacitor 94a between the communication line 16 and the metal part 3 of the first unit housing 22, as in the electrical device 91 of Comparative Example 2 in FIG. 8, the switching noise from the power conversion circuit 45 in the first load equipment 7 is mixed in the communication line 16. Therefore, in the electrical device of the comparative example in which only the capacitor 94a is connected between the communication line 16 and the metal part 3 of the first unit housing 22, the communication quality of the communication signal deteriorates, and malfunction or false detection in the electrical device due to deterioration of the communication signal between the first unit 1 and the second unit 2 occurs.

In contrast, in the electrical device 90 of Embodiment 4, the impedance component 57 in which the capacitor component 50 and the inductor component 51 are connected in series is connected between the communication line 16 and the metal part 3 of the first unit housing 22, so that the noise flowing into the communication line 16 from the power conversion circuit 45 in the first load equipment 7 can be reduced.

The inductor component 51 will be described. In the electrical device 90 of Embodiment 4, the frequency of the communication signal is usually about 10 Hz to 10 kHz as in a typical air conditioner. The magnetic material that constitutes the inductor component 51 is selected such that the impedance in the relatively low frequency range of about the same frequency as the communication signal, namely 10 Hz to 100 kHz, is high, and the impedance in the relatively high frequency range of 100 kHz or higher at which the noise of the power supply 4 becomes a problem is low.

More specifically, the inductor component 51 should be selected such that, for example, in the band equal to or higher than the reference frequency that is 10 times the frequency of the fundamental wave of the communication signal flowing in the communication line 16, the specific permeability is smaller and the impedance is lower than those in the band where frequencies are below the reference frequency. FIG. 22 shows an example of the magnetic material for the inductor component 51 having such characteristics.

The characteristics shown in FIG. 22 are an example of a Mn-Zn magnetic material called H5C3 from TDK. In FIG. 22, the relationship between the frequency and the specific permeability $\mu/\mu_0$ is shown, where $\mu$ is the permeability of the magnetic material and $\mu_0$ is the permeability of vacuum. When the specific permeability $\mu/\mu_0$ is high, the impedance is high, and when the specific permeability $\mu/\mu_0$ is low, the impedance is low.

By using such a material, in the low frequency range, the magnetic moment in the material catches up with the external magnetic field and the impedance becomes higher by reversing the direction of the magnetic field, and in the high frequency range, the magnetic moment in the material does not catch up with the external magnetic field and the impedance becomes unchanged, thereby making the impedance lower, and thus such characteristics can be used.

By forming the inductor component 51 with a magnetic material with the characteristics shown in FIG. 22, the impedance becomes high in the relatively low frequency range from 10 Hz to about 100 kHz, and low in the relatively high frequency range where the frequency is 100 kHz or higher. The inductor component 51 with such characteristics can be used because, as described before, the frequency of communication signal transmitted in the communication line 16 is lower than several kHz, while the international standard value of noise specified by IEC is for the frequency at 150 kHz and above.

Using FIGS. 23 and 24, the relationship between the impedance component 57 including the capacitor component 50 and inductor component 51, and the switching noise that is mixed in the power supply line 15 will be described. FIG. 23 shows the electrical device 90 when the frequency of the noise is low and less than several kHz, and FIG. 24 shows the electrical device 90 when the frequency of the noise is high and more than several hundred kHz.

In the frequency range comparable to the frequency of communication signal, namely several kHz or lower, the inductor component 51 mounted in series with the capacitor component 50 becomes a high impedance component 53 whose impedance is high, as shown in FIG. 23. Therefore, for the noise with the frequency as low as several kHz or less, the impedance of the impedance component 57 connected between the communication line 16 and the metal part 3 of the first unit housing 22 becomes high, so that the switching noise propagating in the metal part 3 of the first unit housing 22 is less likely to leak into the communication line 16.

In the frequency region higher than the frequency of the communication signal, namely several hundred kHz or higher, as shown in FIG. 24, the impedance of the inductor component 51 mounted in series with the capacitor component 50 becomes low, and the impedance component 57 becomes like the capacitor component 50 alone. As a result, the switching noise propagated from the power conversion circuit 45 of the first load equipment 7 through the communication line 16 flows to the metal part 3 of the first unit housing 22 owing to the impedance component 57, and the switching noise that is mixed in the power supply line 15 through the parasitic capacitance between the communication line 16 and the power supply line 15 can be reduced.

As in the electrical device 90 of Embodiment 1, in the electrical device 90 of Embodiment 4, the capacitor 17 is disposed between the positive potential side or ground (negative potential side) of the DC power supplied to the first communication module 10 and the metal part 3 of the first unit housing 22, so that the switching noise mixed in the power supply 4 can be reduced without affecting the quality of the communication signal communicated between the separated boards, namely the first unit board 28 and the second unit board 29.

In the electrical apparatus 90 of Embodiment 4, owing to the frequency characteristics of the impedance in the impedance component 57 including the capacitor component 50 and the inductor component 51 that are connected between the communication line 16 and the metal part 3 of the first unit housing 22, the leakage of the switching noise having a low frequency of several kHz or less into the communication line 16 can be reduced. This makes it possible to reduce the risk of malfunction or false detection in the electrical device 90 due to deterioration of the communication signal between the first unit 1 and the second unit 2 with respect to the switching noise having a low frequency of several kHz or less.

In addition, in the electrical device 90 of Embodiment 4, the impedance of the inductor component 51 decreases with respect to the switching noise having a frequency equal to or higher than 10 times the fundamental frequency of the communication signal flowing through the communication line 16, and the impedance component 57 comes to exhibit the characteristic of the capacitor component 50 alone, and thus the propagation of the switching noise from the communication line 16 to the power supply line 15 can be reduced, and the switching noise superimposed on the power supply line 15 can be reduced.

The air conditioner (FIG. 8) of Patent Document 1 will give poor results in the lightning surge test or the electrostatic discharge testing that are required in an EMC (Electro Magnetic Compatibility) test. A lightning surge applies a large voltage of several hundred volts or more between the power supply line and the housing in the case of one-line ground. Similarly, in the electrostatic discharge testing, contact discharge of several kV is performed to the housing, or aerial discharge is performed in the vicinity of several centimeters to the power supply line or the communication line.

As described above, when a large voltage is applied between the housing and the power supply line, in FIG. 8, a propagation path through the metal part 3, the capacitor 94a, the communication line 16, the capacitor 94b, and the power supply line 15 is generated. Since the capacitance of the capacitor 94b is sufficiently larger than the parasitic capacitance 18, such a propagation path is generated.

Specifically, the parasitic capacitance 18 is proportional to the overlap area S $[m^2]$ between the wires and inversely proportional to the distance d [m] between the wires when the capacitance value C [F] follows the parallel plate capacitor equation. The dielectric constant of the insulating material between the lines is close to one. Therefore, according to the above equation, the capacitance between the power supply line 15 and the communication line 16 is 50 pF or less even if the parallelly running distance of the lines is about 10 m.

In contrast, since the capacitance of the capacitor 94b is at least 1,000 pF or more in order to remove the noise by the above - described method, a difference of 10 times or more usually occurs between them. Therefore, even if only the portions of the capacitor 94b and the parasitic capacitance 18 are compared, the difference in the ease of the noise flow involved during the lightning surge test or the electrostatic discharge testing is more than 10 times greater.

Such a current caused by the lightning surge or the electrostatic discharge flows into the communication line 16 and the power supply line 15, and it is easy to cause malfunction or destruction of the first communication module 95, the second communication module 96, the first load equipment 7, the second noise filter 8, the second load equipment 9, and the converter circuit 30 that are circuits connected to the communication line 16 and the power supply line 15.

In contrast, in the present embodiment, since only the capacitor 17 is involved, even if the parasitic capacitance between the communication line 16 and the power supply line 15 is taken into account, the current due to the lightning surge or the electrostatic discharge is less likely to flow, making it less likely to cause malfunction or destruction. The lightning surge or the electrostatic discharge is generally described in association with electromagnetic susceptibility (EMS) or immunity, which indicates the ability of a target device to withstand an electric field, a magnetic field, voltage, and current. In tests other than the lightning surge test or the electrostatic discharge testing, in the present embodiment, the withstanding ability can be enhanced as compared with the comparative example in FIG. 8 with the same reason described above.

In addition, depending on the noise tolerance of the first signal isolation circuit 13 and the second signal isolation circuit 14, the inductor component 51 may not be necessary. Furthermore, depending on how the first unit board 28 and the second unit board 29 that are printed circuit boards are made, the residual inductance caused by the wiring pattern is generated to be approximately 1 nH per 1 mm or the impedance component in the printed circuit board becomes large due to the internal inductance of the circuit components including an integrated circuit (IC). As a result, the high-impedance component 53 becomes unnecessary. In addition to the capacitor, an arrester or a varistor may be used as the capacitor component 50 in order to deal with EMS.

Other than the method of winding the power supply line and the communication line integrally around the magnetic core, a method of winding the magnetic core only around the power supply line may also acceptable, since the impedance of the receiving end of the communication line is typically high. Usually, a wire is wound in several turns around the magnetic core, which can increase the inductance based on the magnetic core.

In the case of only the power supply line, compared with the case where the power supply line and the communication line are wound together, the number of turns only for the power supply line can be increased for the same magnetic core, and as a result, the impedance of the power supply line can be increased. In addition, since the amount of necessary inductance increase based on the magnetic core to reduce the electromagnetic noise in the power supply line and the amount of necessary inductance increase based on the magnetic core to reduce the electromagnetic noise in the communication line may differ owing to differences in the input and output impedances of each of the ICs. Therefore, different magnetic cores may be used for the power supply line and the communication line.

Embodiment 5

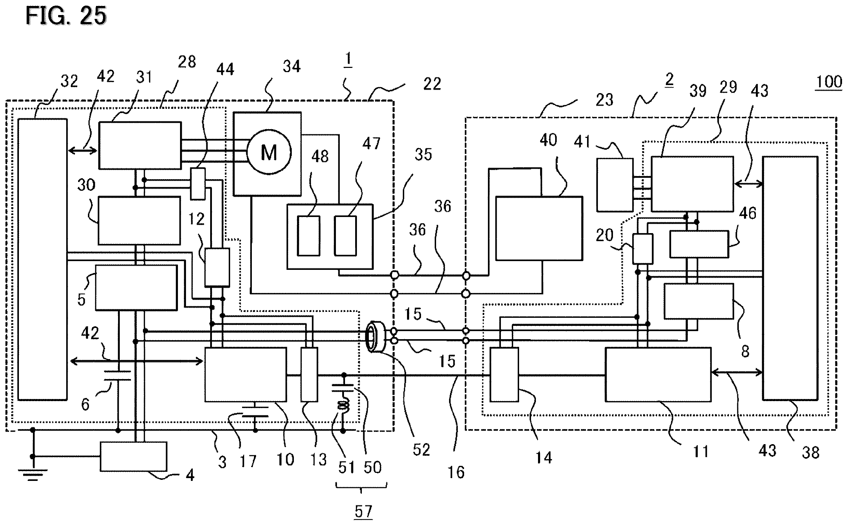

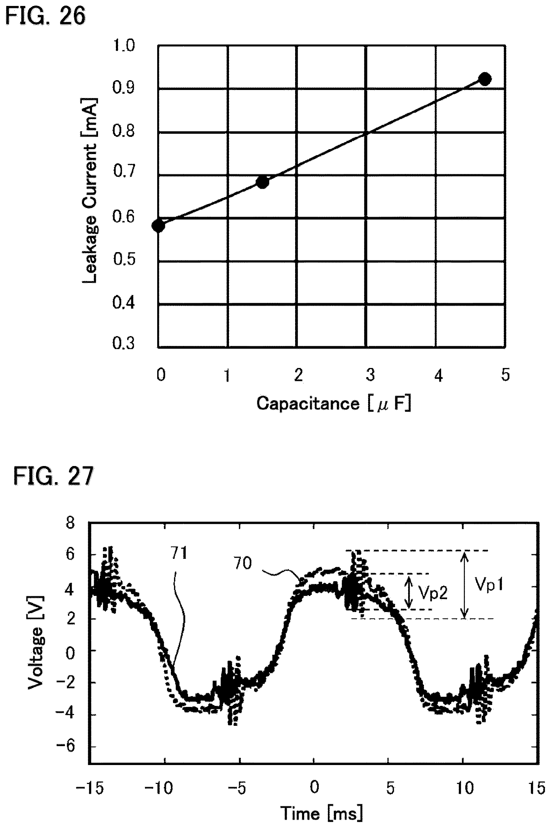

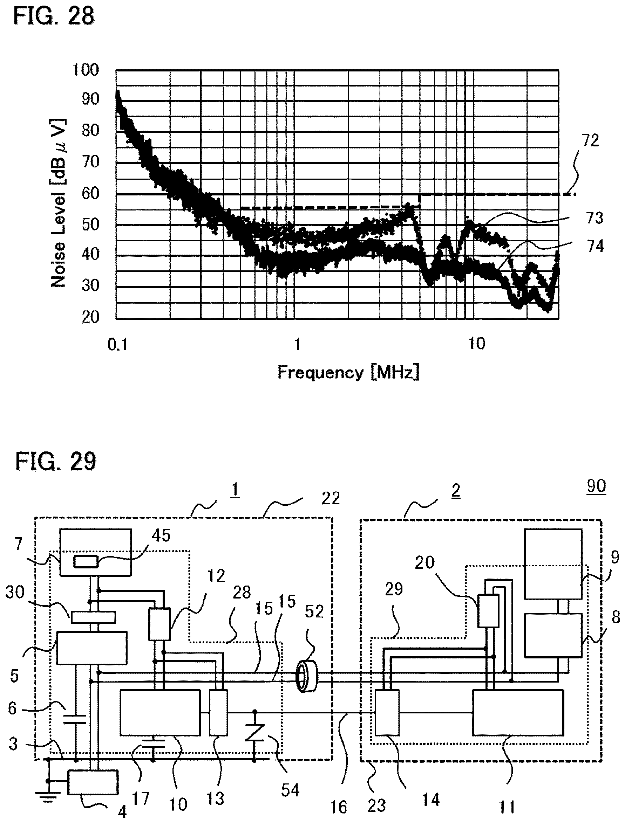

FIG. 25 is a diagram showing an example of an air conditioner according to Embodiment 5 and FIG. 26 is a diagram showing leakage current characteristics of a capacitor that is connected between the communication line and the metal part. FIG. 27 is a diagram showing an example of signal waveforms in the communication line of FIG. 25, and FIG. 28 is a diagram showing an example of frequency characteristics of noise in a power supply line of FIG. 25.

The air conditioner 100 of Embodiment 5 differs from the air conditioner 100 of Embodiment 3 in that, in the outdoor unit 1, a noise filter 44 is provided to remove the noise of the DC power supply output by the converter circuit 30, the magnetic core 52 is attached to the power supply line 15, and the impedance component 57 including the capacitor component 50 and the inductor component 51 connected in series is connected between the communication line 16 and the metal part 3 of the first unit housing 22.

The noise filter 44 is mounted on the first unit board 28. In FIG. 25, the magnetic core 52 and the impedance component 57 are added to the air conditioner 100 shown in FIG. 14, and an example is shown where the capacitor connected between the first communication module 10 and the metal part 3 of the first unit housing 22 is a single capacitor 17. Note that in FIG. 25, in the power supply line 15 connecting the outdoor unit 1 to the indoor unit 2, a circle indicating a connector is indicated.

It is desirable that the magnetic core 52 should be attached in an end portion on the indoor unit 2 side in the first unit board 28 on which the first communication module 10 and the converter circuit 30 that are on the outdoor unit 1 side are mounted. The magnetic core 52 is attached to the power supply line 15 with the power supply line 15 wound therearound. When the magnetic core 52 is attached in the second unit 2 side, noise leaks into the communication line 16, and thus it is not preferable. For example, it is attached to a connector end of the first unit board 28.

Similar to the capacitor 94a connected between the communication line 16 and the metal part 3 of the first unit housing 22 in FIG. 8, as described in Embodiment 1, the switching noise of the power supply line 15 can be reduced by increasing the capacitance value of the capacitor component 50 of the impedance component 57 connected between the communication line 16 and the metal part 3 of the first unit housing 22. However, a problem arises in that the noise of the communication line 16 is likely to increase if the capacitance value of the capacitor component 50 is too large. It has been found that there is a large interdependence between the inductance value based on the magnetic core 52 wound around the power supply line 15 and the capacitance value of the capacitor in the communication line 16. This had not been considered before.

In the case of the air conditioner 100, in the Electrical Appliance and Material Safety Act in Japan, the standard values for switching noise are available from 500 kHz, while in the case of the international standard of the International Special Committee on Radio Interference (CISPR: Comite international Special des Perturbations Radioelectriques), the standard values for switching noise are available from 150 kHz.

Assuming that the total value of the inductance of the magnetic core 52 wound around the power supply line 15 and the residual inductance of the power supply line 15, namely the inductance value of the power supply line 15 including the contribution of the magnetic core 52, is L, and the capacitance value of the capacitor component 50 in the impedance component 57 connected between the communication line 16 and the metal part 3 of the first unit housing 22 is C, it is found that the resonance frequency f shown in Equation (3) needs to be smaller than the frequency at which each standard value starts.

$$f = 1 / (2\pi \times \sqrt{(L \times C)}) \qquad \ldots(3)$$

From the Equation (3), when the resonance frequency f is 150 kHz, the value of $L \times C$ can be calculated approximately to be 1 pF $\times$ H.

Meanwhile, when the capacitance value of the capacitor component 50 in the impedance component 57 connected between the communication line 16 and the metal part 3 of the first unit housing 22 is represented by C, it is found that the leakage current I shown by Equation (4) increases due to the addition of the capacitor component 50, and further the leakage current I changes depending on the value of C.

$$I = 2\pi \times F1 \times C \times Va \qquad \ldots(4)$$

Here, F 1 is the frequency of the power supply 4 that is the AC power supply, and Va is the voltage of the power supply 4 that is the AC power supply with respect to the metal part 3 of the first unit housing 22 of the outdoor unit 1.

FIG. 26 shows the relationship between the capacitance value C of the capacitor component 50 in the impedance component 57 and the measured value of the leakage current I. The leakage current I typically needs to be less than or equal to 1 mA. Assuming that the F1 of the power supply 4 is 60 Hz and the voltage Va is 200 V, when the leakage current I is 1 mA, the capacitance value C of the capacitor component 50 can be calculated from Equation (4) to be about 13,000 pF.

Therefore, in order to suppress the leakage current I to the 1 mA or less, the capacitance value C of the capacitor component 50 needs to be smaller than the about 13,000 pF. However, a leakage current of about 0.5 mA typically flows due to the capacitor 6 connected to the first noise filter 5 and the parasitic capacitance of the compressor 34 which cause the leakage current I. The leakage current due to the capacitor 6 and the parasitic capacitance of the compression device 34 corresponds to a case in which a capacitor is about 6,500 pF.

Therefore, when a design margin including about ± 20% at the maximum, which is an permissible error of the capacitor component 50, is taken, the capacitance value of the capacitor component 50 in the impedance component 57 connected between the communication line 16 and the metal part 3 of the first device housing 22 needs to be approximately equal to or less than 5,000 pF.

Thus, by the satisfaction of both the value of L × C calculated from the resonance frequency f, for example, 1 pF × H, and the capacitance value C of the capacitor component 50 calculated from the leakage current I, for example, 5,000 pF, the leakage current I when the capacitor component 50 is attached between the communication line 16 and the metal part 3 of the first unit housing 22 can be kept within the standard value while the noise mixed in the power supply 4 is reduced.

Unlike the air conditioner 100 of Embodiment 5, when the capacitor component 50 is not attached to the communication line 16, the magnetic core 52 needs to be attached to the communication line 16. In contrast, as in the air conditioner 100 of Embodiment 5, attaching the capacitor component 50 to the communication line 16 reduces the impedance of the communication line 16 to the metal part 3 of the first unit housing 22 with respect to the AC component of the noise.

Therefore, it is understood that the magnetic core 52 can be wound only around the power supply line 15 without being wound around the communication line 16, and even in the case without the winding of the communication line 16 and the power supply line 15 together, the same effect of reducing the switching noise as in the case of the winding of the communication line 16 and the power supply line 15 together can be obtained. This means that when the dimension of the inner diameter of the magnetic core 52 is constant, the number of turns of the power supply line 15 wound around the magnetic core 52 can be increased.

For example, in contrast to the case where one wire for the communication line 16 and two wires for the power supply line 15 are collectively wound around the magnetic core 52 in two turns, if only two wires for the power supply line 15 are wound around the magnetic core 52, the wires for the power supply line 15 can be wound around the magnetic core 52 in three turns. As the number of turns around the magnetic core 52 increases, the inductance of the power supply line 15 can be increased, and thus the switching noise of the power supply line 15 can be reduced.

The reason why the magnetic core 52 is not necessary to be wound around the communication line 16 will be described in detail. Due to the high impedance on the receiver circuit side of the communication line 16, current including AC of the communication signal is not likely to flow through the communication line 16. However, when the capacitor component 50 is not provided in the communication line 16, it is necessary to further increase the impedance by attaching the magnetic core 52 in order to prevent the switching noise from leaking into the communication line 16.

In contrast, in the case where the capacitor component 50 is provided in the communication line 16 as in the air conditioner 100 of Embodiment 5, the capacitor component 50 serves as a propagation path of the switching noise that is AC current, and the switching noise does not flow to the receiver circuit side in which the impedance is high, and the effect obtained by the magnetic core 52 becomes small, and thus it is understood that the magnetic core 52 is not necessary to be wound around the communication line 16.

FIG. 27 shows an example of a signal waveform 71 of the communication line 16 in the air conditioner 100 of Embodiment 5 in which the impedance component 57 including the capacitor component 50 and the inductor component 51 that are connected in series is connected between the communication line 16 and the metal part 3 of the first unit housing 22. Also shown in FIG. 27 is a signal waveform 70 of the communication line 16 in a comparative example in which the impedance component 57 is not connected between the communication line 16 and the metal part 3 of the first unit housing 22.

In the present embodiment, a 1,500 pF capacitor is used for the capacitor component 50 in the impedance component 57 of the communication line 16, and H5C3T10×2.5×5 manufactured by TDK Corporation is used for the inductor component 51. A ferrite core GRFC-13 manufactured by Kitagawa Industries Co., Ltd is used in which the power supply line 15 is wound in two turns. In contrast, in the comparative example, the conditions are such that the impedance component 57 is not used and H5C3T10×2.5×5 is not used.

But otherwise the measurement is performed under the same conditions. As shown in FIG. 27, the ringing voltage is a peak-to-peak voltage of the ringing that is mixed in the communication signal waveform, and the value of the ringing voltage Vp2 in the present embodiment is about 2 V, while the value of the ringing voltage Vp 1 in the comparative example is more than 4 V The smaller the ringing voltage, the more desirable it is, and it can be seen that the switching noise of the communication line 16 can be reduced.

FIG. 28 shows an example of a conducted noise characteristic 74 of the switching noise mixed in the power supply line 15 in the air conditioner 100 of Embodiment 5. Further, FIG. 28 shows a conducted noise characteristic 73 of the switching noise mixed in the power supply line 15 and standard values 72 of the CISPR standard in the comparative example. As shown in FIG. 28, it can be seen that in the band of 500 kHz or higher, the conducted noise characteristic 74 of the present embodiment is reduced by 5 dB to 10 dB compared with the conducted noise characteristic 73 of the comparative example.

When comparing the conducted noise characteristic 74 of the present embodiment with the conducted noise characteristic 73 of the comparative example, in particular, at the peak value at 5 MHz, the noise level is reduced by about 15 dB. Note that in the band of 500 kHz or less, the switching noise on the power supply line 15 in the comparative example and the present embodiment is at the same level.

In the air conditioner 100 of Embodiment 5, as in the air conditioner 100 of Embodiment 3, the capacitor 17 is disposed between the positive potential side or ground (negative potential side) of the DC power supplied to the first communication module 10 and the metal part 3 of the first unit housing 22, so that the switching noise mixed in the power supply 4 can be reduced without affecting the quality of the communication signal communicated between the separated boards, namely the first unit board 28 and the second unit board 29.

In the air conditioner 100 according to Embodiment 5, owing to the frequency characteristics of the impedance in the impedance component 57 including the capacitor component 50 and the inductor component 51 that are connected between the communication line 16 and the metal part 3 of the first unit housing 22, the leakage of the switching noise having a low frequency of several kHz or less into the communication line 16 can be reduced. This makes it possible to reduce the risk of malfunction or false detection in the air conditioner 100 due to deterioration of the communication signal between the outdoor unit 1 and the indoor unit 2 with respect to the switching noise having a low frequency of several kHz or less.

In addition, in the air conditioner 100 of Embodiment 5, the impedance of the inductor component 51 decreases with respect to the switching noise having a frequency equal to or higher than 10 times the fundamental frequency of the communication signal flowing through the communication line 16, and the impedance component 57 comes to exhibit the characteristic of the capacitor component 50 alone, and thus the propagation of the switching noise from the communication line 16 to the power supply line 15 can be reduced, and the switching noise superimposed on the power supply line 15 can be reduced.

Further, in the air conditioner 100 of Embodiment 5, the capacitance value C of the capacitor component 50 of the impedance component 57 connected between the communication line 16 and the metal part 3 of the first unit housing 22 is set to 5,000 pF or less, and a value of the product $C \times L$ of the inductance value L of the power supply line 15 including the contribution of the magnetic core 52 attached to the power supply line 15 and the capacitance value C of the capacitor component 50 is set to 1 pF $\times$ H or more, and thus the noise that leaks into the communication line 16 can be reduced while the switching noise from the communication line 16, superimposed on the power supply line 15 leading to the power supply 4, can be reduced, and the leakage current I due to the communication signal flowing in the communication line 16 can be reduced.

Embodiment 6

FIG. 29 shows an example of an electrical device according to Embodiment 6. The electrical device 90 of Embodiment 6 differs from the electrical device 90 of Embodiment 4 in that a varistor 54 is connected between the communication line 16 and the metal part 3 of the first unit housing 22 instead of the impedance component 57 in which the capacitor component 50 and the inductor component 51 are connected in series.

Unlike the capacitor component 50, the varistor 54 exhibits equivalently a capacitor when the voltage applied to both ends of the varistor 54 is low, resulting in high impedance. In addition, since the inductance is larger than that of the capacitor component 50, there is no need to use the inductor component 51. Therefore, by using the varistor 54, the characteristics of the capacitor component 50 and the inductor component 51 can be obtained with the varistor 54 alone, without the need to mount the capacitor component 50 and the inductor component 51 in series.

In other words, the varistor 54 has a capacitive component and an inductive component. However, since the capacitance value of the varistor 54 is not so large and is about 500 pF at the maximum, it is necessary to secure the necessary capacitance value described in Embodiment 5 by connecting a plurality of the varistors 54 in parallel as needed. The varistor 54 should be selected such that, for example, in the band equal to or higher than the reference frequency that is 10 times the frequency of the fundamental wave of the communication signal flowing in the communication line 16, the inductive component is small and the capacitive component is dominant as compared with those in the band where frequencies are below the reference frequency.

In the electric device 90 of Embodiment 6, as in the electric device 90 of Embodiment 4, the capacitor 17 is disposed between the positive potential side or ground (negative potential side) of the DC power supplied to the first communication module 10 and the metal part 3 of the first unit housing 22, so that the switching noise mixed in the power supply 4 can be reduced without affecting the quality of the communication signal communicated between the separated boards, namely the first unit board 28 and the second unit board 29.

In the electric device 90 of Embodiment 6, as in the electric device 90 of Embodiment 4, owing to the frequency characteristics of the impedance in the varistor 54 connected between the communication line 16 and the metal part 3 of the first unit housing 22, the leakage of the switching noise having a frequency of several kHz or less into the communication line 16 can be reduced. As a result, it is possible to reduce the risk of malfunction or false detection in the electric device 90 due to deterioration of the communication signal between the first unit 1 and the second unit 2 with respect to the switching noise having a frequency of several kHz or less.

In addition, in the electrical device 90 of Embodiment 6, the impedance of the varistor 54 decreases with respect to the switching noise having a frequency equal to or higher than 10 times the fundamental frequency of the communication signal flowing in the communication line 16, and the varistor 54 comes to exhibit the characteristic of a capacitor alone, and thus the propagation of the switching noise from the communication line 16 to the power supply line 15 can be reduced, and the switching noise superimposed on the power supply line 15 can be reduced.

Further, in the electric device 90 of Embodiment 6, the capacitance value C of the varistor 54 connected between the communication line 16 and the metal part 3 of the first unit housing 22 is set to 5,000 pF or less, and the value of the product $C \times L$ of the inductance value L of the power supply line 15 including the contribution of the magnetic core 52 attached to the power supply line 15 and the capacitance value C of the varistor 54 is set to $1 \text{ pF} \times \text{H}$ or more, and thus the noise that leaks into the communication line 16 can be reduced while the switching noise from the communication line 16, superimposed on the power supply line 15 leading to the power supply 4, can be reduced, and the leakage current I due to the communication signal flowing in the communication line 16 can be reduced.

Embodiment 7

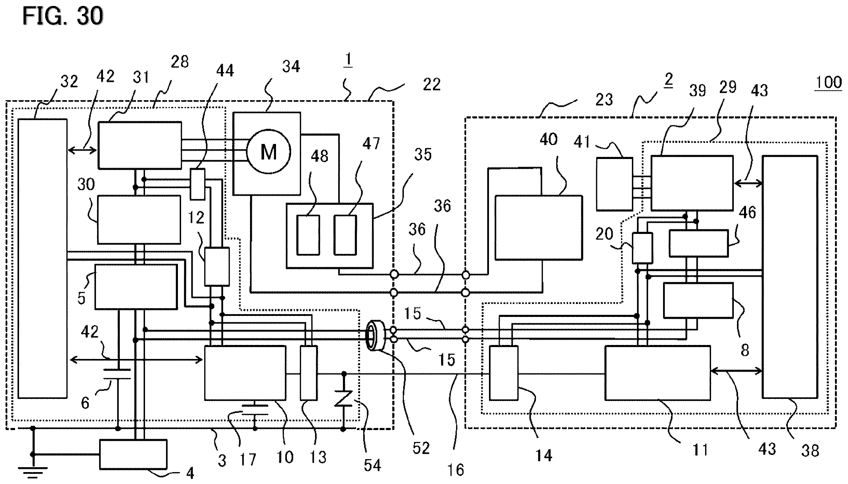

FIG. 30 shows an example of an air conditioner according to Embodiment 7. The air conditioner 100 of Embodiment 7 differs from the air conditioner 100 of Embodiment 5 in that the varistor 54 is connected between the communication line 16 and the metal part 3 of the first unit housing 22 instead of the impedance component 57 in which the capacitor component 50 and the inductor component 51 are connected in series. The characteristics of the varistor 54 are as described in Embodiment 6. Since the capacitance value of the varistor 54 is not so large and is about 500 pF at the maximum, it is necessary to secure the necessary capacitance value described in Embodiment 5 by connecting a plurality of the varistors 54 in parallel as needed.

As in the air conditioner 100 of Embodiment 5, in the air conditioner 100 of Embodiment 7, the capacitor 17 is disposed between the positive potential side or ground (negative potential side) of the DC power supplied to the first communication module 10 and the metal part 3 of the first unit housing 22, so that the switching noise mixed in the power supply 4 can be reduced without affecting the quality of the communication signal communicated between the separated boards, namely the first unit board 28 and the second unit board 29.

In the air conditioner 100 of Embodiment 7, as in the air conditioner 100 of Embodiment 5, owing to the frequency characteristics of the impedance in the varistor 54 connected between the communication line 16 and the metal part 3 of the first unit housing 22, the leakage of the switching noise having a frequency of several kHz or less into the communication line 16 can be reduced. As a result, it is possible to reduce the risk of malfunction or false detection in the air conditioner 100 due to deterioration of the communication signal between the outdoor unit 1 and the indoor unit 2 with respect to the switching noise having a frequency of several kHz or less.

In addition, in the air conditioner 100 of Embodiment 7, the impedance of the varistor 54 decreases with respect to the switching noise having a frequency equal to or higher than 10 times the fundamental frequency of the communication signal flowing in the communication line 16, and the varistor 54 comes to exhibit the characteristic of a capacitor alone, and thus the propagation of the switching noise from the communication line 16 to the power supply line 15 can be reduced, and the switching noise superimposed on the power supply line 15 can be reduced.

Further, in the air conditioner 100 of Embodiment 7, the capacitance value C of the varistor 54 connected between the communication line 16 and the metal part 3 of the first unit housing 22 is set to 5,000 pF or less, and the value of the product $C \times L$ of the inductance value L of the power supply line 15 including the contribution of the magnetic core 52 attached to the power supply line 15 and the capacitance value C of the varistor 54 is set to $1 \text{ pF} \times \text{H}$ or more,

and thus the noise that leaks into the communication line 16 can be reduced while the switching noise from the communication line 16, superimposed on the power supply line 15 leading to the power supply 4, can be reduced, and the leakage current I due to the communication signal flowing in the communication line 16 can be reduced.

Description of Reference Numerals and Signs

| | |
|---|---|
| 1: | first unit (outdoor unit) |
| 2: | second unit (indoor unit) |
| 3: | metal part |
| 4: | power supply |
| 5: | first noise filter (noise filter) |
| 10: | first communication module |
| 11: | second communication module |
| 12: | isolated conversion circuit (first isolated conversion circuit) |
| 13: | first signal isolation circuit |
| 14: | second signal isolation circuit |
| 15: | power supply line |
| 16: | communication line |
| 17 | capacitor |
| 17a | capacitor |
| 17b: | capacitor |
| 20: | isolated conversion circuit (second isolated conversion circuit) |
| 21: | unit housing (housing) |
| 22: | first unit housing (housing, first housing) |
| 23: | second unit housing (another housing, second housing) |
| 28: | first unit board (first board) |
| 29: | second unit board (second board) |
| 30: | converter circuit |
| 31: | first inverter circuit (inverter circuit) |
| 34: | compressor |
| 35: | outdoor heat exchanger |
| 36: | refrigerant pipe |
| 40: | indoor heat exchanger |
| 44: | noise filter (another noise filter) |
| 45: | power conversion circuit |
| 50: | capacitor component |
| 51: | inductor component |
| 52: | magnetic core |
| 54: | varistor |
| 55: | semiconductor element (switching element) |
| 57: | impedance component |
| 90: | electrical device |
| 100: | air conditioner |

**Claims**

1. An electrical device (90) that is arranged to be supplied with power from a power supply (4) and to perform communication via a communication line (16) between a first board (28) and a second board (29) that are separated,

   the electrical device (90) comprising:

   - the communication line (16);
   - the first board (28) housed in a housing (21, 22) including a metal part (3);
   - a power conversion circuit (45) includes a switching element (55);
   - a first communication module (10);

- a first signal isolation circuit (13) that allows a communication signal to pass while isolating the first communication module (10) from the communication line (16);
- a first isolated conversion circuit (12) that supplies DC power isolated from power supplied to the power conversion circuit (45), to the first communication module (10);
- the second board (29) housed in the housing (21, 22) or another housing (23);
- a second communication module (11) performs communication with the first communication module (10);
- a second signal isolation circuit (14) that allows the communication signal to pass while isolating the second communication module (11) from the communication line (16);
- a second isolated conversion circuit (20) that supplies DC power isolated from power supplied to the power conversion circuit (45), to the second communication module (11); and
- a capacitor (17) that is connected between a conductor to which DC power output to the first communication module (10) from the first isolated conversion circuit (12) is supplied and the metal part (3) of the housing (21, 22), the conductor being a conductor on a negative potential side serving as a voltage reference or a conductor on a positive potential side which is at a higher potential than the negative potential side;
- wherein the power conversion circuit (45), the first communication module (10), the first signal isolation circuit (13), the first isolated conversion circuit (12) are mounted on the first board (28); and

wherein the second communication module (11), the second signal isolation circuit (14), second isolated conversion circuit (20) are mounted on the second board (29).

2. The electrical device (90) according to claim 1, further comprising:

- a power supply line (15) that supplies power from the power supply (4) outside the housing (22) and the another housing (23) to the first board (28) and the second board (29);

wherein the second board (29) is housed in the another housing (23); and wherein the power supply line (15) and the communication line (16) are disposed to run partially in parallel.

3. The electrical device (90) according to claim 2, further comprising:

- a magnetic core (52) around which the power supply line (15) is wound in the housing (22); and
- an impedance component (57) that is connected between the communication line (16) and the metal part (3) of the housing (22) and in which a capacitor component (50) and an inductor component (51) are connected in series,

wherein the inductor component (51) is such that, in a band equal to or higher than a reference frequency that is 10 times a frequency of a fundamental wave of the communication signal flowing in the communication line (16), a specific permeability is smaller and impedance is lower than those in a band where frequencies are below the reference frequency.

4. The electrical device (90) according to claim 2, further comprising:

- a magnetic core (52) around which the power supply line (15) is wound in the housing (22); and
- a varistor (54) that is connected between the communication line (16) and the metal part (3) of the housing (22),

wherein the varistor (54) is such that, in a band equal to or higher than a reference frequency that is 10 times a frequency of a fundamental wave of the communication signal flowing in the communication line (16), an inductive component is small and a capacitive component is dominant as compared with those in a band where frequencies are below the reference frequency.

5. The electrical device (90) according to claim 3,

wherein an inductance value of the magnetic core (52) and the power supply line (15) is L, a capacitance value of a capacitor component (50) in the impedance component (57) connected to the communication line (16) is C, and a value of product of L and C is $1 \text{ pF} \times \text{H}$ and the value of C is 5,000 pF or less.

**6.** The electrical device (90) according to claim 4,

wherein an inductance value of the magnetic core (52) and the power supply line (15) is L,
a capacitance value of the varistor (54) connected to the communication line (16) is C, and
a value of product of L and C is 1 pF $\times$ H and the value of C is 5,000 pF or less.

**7.** The electrical device (90) according to any one of claims 1 to 6,

wherein the switching element (55) of the power conversion circuit (45) is a semiconductor element formed of a wide bandgap semiconductor material, a first said capacitor (17a) that is connected between the conductor on the negative potential side to which the DC power output to the first communication module (10) is supplied and the metal part (3) of the housing (22), and
a second said capacitor (17b) that is connected between the conductor on the positive potential side to which the DC power output to the first communication module (10) is supplied and the metal part (3) of the housing (22) close to the switching element (55).

**Patentansprüche**

**1.** Elektrische Vorrichtung (90), die dazu eingerichtet ist, Energie von einer Stromversorgung (4) zugeführt zu bekommen und eine Kommunikation über eine Kommunikationsleitung (16) zwischen einer ersten Platine (28) und einer zweiten Platine (29) durchzuführen, die getrennt sind,
wobei die elektrische Vorrichtung (90) das Folgende aufweist:

- die Kommunikationsleitung (16);
- die erste Platine (28), die in einem Gehäuse (21, 22) untergebracht ist, das ein Metallteil (3) aufweist;
- eine Leistungsumwandlungsschaltung (45), die ein Schaltelement (55) aufweist;
- ein erstes Kommunikationsmodul (10);
- eine erste Signaltrennschaltung (13), die ein Kommunikationssignal passieren lässt, während sie das erste Kommunikationsmodul (10) von der Kommunikationsleitung (16) trennt;
- eine erste getrennte Umwandlungsschaltung (12), die dem ersten Kommunikationsmodul (10) Gleichstrom zuführt, der von der Energie getrennt ist, die der Leistungsumwandlungsschaltung (45) zugeführt wird;
- die zweite Platine (29), die in dem Gehäuse (21, 22) oder einem anderen Gehäuse (23) untergebracht ist;
- ein zweites Kommunikationsmodul (11), das eine Kommunikation mit dem ersten Kommunikationsmodul (10) durchführt;
- eine zweite Signaltrennschaltung (14), die das Kommunikationssignal passieren lässt, während sie das zweite Kommunikationsmodul (11) von der Kommunikationsleitung (16) trennt;
- eine zweite getrennte Umwandlungsschaltung (20), die dem zweiten Kommunikationsmodul (11) Gleichstrom zuführt, der von der Energie getrennt ist, die der Leistungsumwandlungsschaltung (45) zugeführt wird; und
- einen Kondensator (17), der zwischen einem Leiter, dem die Gleichstromabgabe an das erste Kommunikationsmodul (10) von der ersten getrennten Umwandlungsschaltung (12) zugeführt wird, und dem Metallteil (3) des Gehäuses (21, 22) angeschlossen ist, wobei der Leiter ein Leiter auf einer Seite mit negativem Potential ist, die als eine Spannungsreferenz dient, oder ein Leiter auf einer Seite mit positivem Potential ist, das sich auf einem höheren Potential als die Seite mit negativem Potential befindet;
- wobei die Leistungsumwandlungsschaltung (45), das erste Kommunikationsmodul (10), die erste Signaltrennschaltung (13) und die erste getrennte Umwandlungsschaltung (12) auf der ersten Platine (28) angebracht sind; und wobei das zweite Kommunikationsmodul (11), die zweite Signaltrennschaltung (14) und die zweite getrennte Umwandlungsschaltung (20) auf der zweiten Platine (29) angebracht sind.

**2.** Elektrische Vorrichtung (90) nach Anspruch 1,
die ferner das Folgende aufweist:

- eine Stromversorgungsleitung (15), die Energie von der Stromversorgung (4) außerhalb des Gehäuses (22) und des anderen Gehäuses (23) der ersten Platine (28) und der zweiten Platine (29) zuführt;

wobei die zweite Platine (29) in dem anderen Gehäuse (23) untergebracht ist; und wobei die Stromversorgungsleitung (15) und die Kommunikationsleitung (16) so angeordnet sind, dass sie teilweise parallel verlaufen.

**3.** Elektrische Vorrichtung (90) nach Anspruch 2,
die ferner das Folgende aufweist:

- einen Magnetkern (52) in dem Gehäuse (22), um den die Stromversorgungsleitung (15) gewickelt ist; und
- eine Impedanzkomponente (57), die zwischen der Kommunikationsleitung (16) und dem Metallteil (3) des Gehäuses (22) angeschlossen ist und in dem eine Kondensatorkomponente (50) und eine Induktorkomponente (51) in Reihe geschaltet sind,

wobei die Induktorkomponente (51) so beschaffen ist, dass in einem Band, das gleich oder höher als eine Referenzfrequenz ist, die das 10-fache einer Frequenz einer Grundwelle des Kommunikationssignals ist, das in der Kommunikationsleitung (16) fließt, eine spezifische Permeabilität kleiner und eine Impedanz niedriger ist als die jeweiligen Größen in einem Band, in dem Frequenzen unterhalb der Referenzfrequenz liegen.

**4.** Elektrische Vorrichtung (90) nach Anspruch 2,
die ferner das Folgende aufweist:

- einen Magnetkern (52) in dem Gehäuse (22), um den die Stromversorgungsleitung (15) gewickelt ist; und
- einen Varistor (54), der zwischen der Kommunikationsleitung (16) und dem Metallteil (3) des Gehäuses (22) angeschlossen ist,

wobei der Varistor (54) so beschaffen ist, dass in einem Band, das gleich oder höher als eine Referenzfrequenz ist, die das 10-fache einer Frequenz einer Grundwelle des Kommunikationssignals ist, das in der Kommunikationsleitung (16) fließt, eine induktive Komponente klein ist und eine kapazitive Komponente dominant ist, im Vergleich zu den jeweiligen Größen in einem Band, in dem Frequenzen unterhalb der Referenzfrequenz liegen.

**5.** Elektrische Vorrichtung (90) nach Anspruch 3,

wobei ein Induktivitätswert des Magnetkerns (52) und der Stromversorgungsleitung (15) gleich List,
ein Kapazitätswert einer Kondensatorkomponente (50) in der Impedanzkomponente (57), die mit der Kommunikationsleitung (16) verbunden ist, gleich C ist, und das Produkt aus L und C einen Wert von 1 pF$\times$ H besitzt und C einen Wert von 5.000 pF oder weniger besitzt.

**6.** Elektrische Vorrichtung (90) nach Anspruch 4,

wobei ein Induktivitätswert des Magnetkerns (52) und der Stromversorgungsleitung (15) gleich List,
ein Kapazitätswert des Varistors (54), der mit der Kommunikationsleitung (16) verbunden ist, gleich C ist, und das Produkt aus L und C einen Wert von 1 pF$\times$ H besitzt und C einen Wert von 5.000 pF oder weniger besitzt.

**7.** Elektrische Vorrichtung (90) nach einem der Ansprüche 1 bis 6,

wobei das Schaltelement (55) der Leistungsumwandlungsschaltung (45) ein Halbleiterelement ist, das aus einem Halbleitermaterial mit breiter Bandlücke gebildet ist,
ein erster Kondensator (17a) zwischen dem Leiter auf der Seite mit negativem Potential, dem die Gleichstromabgabe an das erste Kommunikationsmodul (10) zugeführt wird, und dem Metallteil (3) des Gehäuses (22) angeschlossen ist, und ein zweiter Kondensator (17b) zwischen dem Leiter auf der Seite mit positivem Potential, dem die Gleichstromabgabe an das erste Kommunikationsmodul (10) zugeführt wird, und dem Metallteil (3) des Gehäuses (22) in der Nähe des Schaltelements (55) angeschlossen ist.

**Revendications**

**1.** Dispositif électrique (90) qui est agencé pour être alimenté avec une puissance provenant d'une alimentation de puissance (4) et pour effectuer une communication via une ligne de communication (16) entre une première carte (28) et une seconde carte (29) qui sont séparées,
le dispositif électrique (90) comprenant :

- la ligne de communication (16) ;
- la première carte (28) logée dans un boîtier (21, 22) incluant une partie métallique (3) ;

- un circuit de conversion de puissance (45) incluant un élément de commutation (55) ;
- un premier module de communication (10) ;
- un premier circuit d'isolation de signal (13) qui permet à un signal de communication de passer, tout en isolant le premier module de communication (10) de la ligne de communication (16) ;
- un premier circuit de conversion isolé (12) qui alimente une puissance en courant continu (CC) isolée d'une puissance alimentée au circuit de conversion de puissance (45), au premier module de communication (10) ;
- la seconde carte (29) logée dans le boîtier (21, 22) ou dans un autre boîtier (23) ;
- un second module de communication (11) effectuant une communication avec le premier module de communication (10) ;
- un second circuit d'isolation de signal (14) qui permet au signal de communication de passer, tout en isolant le second module de communication (11) de la ligne de communication (16) ;
- un second circuit de conversion isolé (20) qui alimentent une puissance CC isolée de la puissance alimentée au circuit de conversion de puissance (45), au second module de communication (11) ; et
- un condensateur (17) qui est connecté entre un conducteur, auquel une puissance CC sortie vers le premier module de communication (10) depuis le premier circuit de conversion isolé (12) est alimentée, et la partie métallique (3) du boîtier (21, 22), le conducteur étant un conducteur sur un côté de potentiel négatif servant de référence de tension ou un conducteur sur un côté de potentiel positif qui est à un potentiel plus élevé que le côté de potentiel négatif ;
- dans lequel le circuit de conversion de puissance (45), le premier module de communication (10), le premier circuit d'isolation de signal (13), le premier circuit de conversion isolé (12) sont montés sur la première carte (28) ; et
- dans lequel le second module de communication (11), le second circuit d'isolation de signal (14), le second circuit de conversion isolé (20) sont montés sur la seconde carte (29).

2. Dispositif électrique (90) selon la revendication 1,
comprenant en outre :

- une ligne d'alimentation de puissance (15) qui alimente une puissance depuis l'alimentation de puissance (4) à l'extérieur du boîtier (22) et de l'autre boîtier (23) à la première carte (28) et à la seconde carte (29) ;

dans lequel la seconde carte (29) est logée dans l'autre boîtier (23) ; et dans lequel la ligne d'alimentation de puissance (15) et la ligne de communication (16) sont disposées pour s'étendre partiellement en parallèle.

3. Dispositif électrique (90) selon la revendication 2,
comprenant en outre :

- un noyau magnétique (52) autour duquel la ligne d'alimentation de puissance (15) est enroulée dans le boîtier (22) ; et
- un composant d'impédance (57) qui est connecté entre la ligne de communication (16) et la partie métallique (3) du boîtier (22) et dans lequel un composant de condensateur (50) et un composant d'inducteur (51) sont connectés en série,

dans lequel le composant d'inducteur (51) est tel que, dans une bande égale ou supérieure à une fréquence de référence qui est 10 fois une fréquence d'une onde fondamentale du signal de communication s'écoulant dans la ligne de communication (16), une perméabilité spécifique est plus petite et une impédance est plus basse que celles dans une bande où des fréquences sont en dessous de la fréquence de référence.

4. Dispositif électrique (90) selon la revendication 2,
comprenant en outre :

- un noyau magnétique (52) autour duquel la ligne d'alimentation de puissance (15) est enroulée dans le boîtier (22) ; et
- une varistance (54) qui est connectée entre la ligne de communication (16) et la partie métallique (3) du boîtier (22),

dans lequel la varistance (54) est telle que, dans une bande égale ou supérieure à une fréquence de référence qui est 10 fois une fréquence d'une onde fondamentale du signal de communication s'écoulant dans la ligne de communication (16), un composant inductif est petit et un composant capacitif est dominant, par comparaison à ceux dans une bande où des fréquences sont en dessous de la fréquence de référence.

5. Dispositif électrique (90) selon la revendication 3,

dans lequel une valeur d'inductance du noyau magnétique (52) et de la ligne d'alimentation de puissance (15) est L,
une valeur de capacité d'un composant de condensateur (50) dans le composant d'impédance (57) connecté à la ligne de communication (16) est C, et
une valeur d'un produit de L et C est 1 pF × H et la valeur de C est 5,000 pF ou moins.

6. Dispositif électrique (90) selon la revendication 4,

dans lequel une valeur d'inductance du noyau magnétique (52) et de la ligne d'alimentation de puissance (15) est L,
une valeur de capacité de la varistance (54) connectée à la ligne de communication (16) est C, et
une valeur d'un produit de L et C est 1 pF × H et la valeur de C est 5,000 pF ou moins.

7. Dispositif électrique (90) selon l'une des revendications 1 à 6,

dans lequel l'élément de commutation (55) du circuit de conversion de puissance (45) est un élément semi-conducteur formé d'un matériau semi-conducteur à large bande interdite, d'un dit premier condensateur (17a) qui est connecté entre le conducteur sur le côté de potentiel négatif auquel la puissance CC sortie vers le premier module de communication (10) est alimentée, et la partie métallique (3) du boîtier (22), et
un dit second condensateur (17b) qui est connecté entre le conducteur sur le côté de potentiel positif, auquel la puissance CC sortie vers le premier module de communication (10) est alimentée, et la partie métallique (3) du boîtier (22) proche de l'élément de commutation (55).

FIG. 1

FIG. 2

# FIG. 3

# FIG. 4

# FIG. 5

**FIG. 6**

**FIG. 7**

FIG. 8

FIG. 9

**FIG. 10**

**FIG. 11**

FIG. 12

FIG. 13

FIG. 14

FIG. 15

25a

17a

25b

28

33

3

FIG. 16

31

56

55

30

55

56

FIG. 17

16

75

76

FIG. 18

FIG. 19

**FIG. 20**

## FIG. 21

## FIG. 22

| kHz | $\mu / \mu_0$ |
|-----|-----|
| 10 | 16000 |
| 50 | 16000 |
| 100 | 12000 |
| 150 | 9000 |
| 200 | 7200 |
| 400 | 3000 |

**FIG. 23**

**FIG. 24**

**FIG. 25**

FIG. 26

FIG. 27

FIG. 28

FIG. 29

# FIG. 30

EP 3 933 290 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016220398 A

- JP 2015143598 A